# EUROPEAN PATENT SPECIFICATION

(11) **EP 4 180 841 B1**
(45) Date of publication and mention of the grant of the patent: **15.01.2025**
(21) Application number: 21208068.3
(22) Date of filing: 12.11.2021
(51) Int. Cl.: G01S 15/96, G01S 15/50, G01S 7/56, G01S 15/06

(54) **DEVICE AND METHOD FOR TARGET DETECTION**
VORRICHTUNG UND VERFAHREN ZUR ZIELERKENNUNG
DISPOSITIF ET PROCÉDÉ DE DÉTECTION DE CIBLE

(43) Date of publication of application: 17.05.2023
(73) Proprietor: FURUNO ELECTRIC CO., LTD., Nishinomiya-City, Hyogo 662-8580 (JP)
(72) Inventor: NAGAI, Sanae, Nishinomiya-city, 662-8580 (JP)
(74) Representative: Cleveland Scott York

(56) References cited:
- GB-A- 2 576 821
- US-A1- 2020 018 851

## Description

The present invention mainly relates to a sound navigation and ranging (SONAR) system for detecting a target in water, a target detection method for detecting the target in water, and a computer-program for executing a function for detecting the target in water.

Conventionally, a SONAR system for detecting a target in water is known. This type of SONAR system transmits ultrasonic waves into water, receives the reflected waves, calculates echo intensity from each position in the water, and displays a three-dimensional distribution (echo image) of the echo intensity on a screen. In some applications, the target comprises a fish school. When a user clicks a position of the fish school on the screen, the SONAR system sets a range to which the echoes are connected from the clicked position, as the range of the fish school. The SONAR system then displays an outline of the fish school range in a given color to make it easier to see the range of the fish school.

Then, the SONAR system transmits and receives ultrasonic wave again at a next transmission timing to update the echo image. At this time, the SONAR system calculates a position that specifies the range of the fish school set in the previous process, and the range in which the echoes are connected from the calculated position is updated as the new range of the fish school. The SONAR system then displays the outline of the updated fish school range in the same color as before. Thereafter, the SONAR system repeats the same process to update the range of the fish school and its display.

Patent document 1 discloses such an underwater detection device. As used herein, the patent document 1 may be JP2020-008519A (also published as US2020/018851A1). However, in the patent document 1, when a fish school selected by the user approaches some other target such as a wake, the echoes of the fish school get connected to the echoes of the other target. Therefore, the range to which the echoes extend is not only the range of the fish school itself but also the range of the other target. As a result, a large range in which the fish school is connected to the other target is searched and displayed as the range of that fish school.

In view of the above problem, it is an object of the present invention to provide a SONAR device, a target detection method, and a computer-program capable of properly searching for fish school in water.

A first aspect of the invention relates to a SONAR device. The SONAR device includes an echo signal acquisition module and a target detection module. The echo signal acquisition module is configured to acquire echo signals from a ping, from a plurality of reception spaces adjacent to each other, the echo signals being of a target comprising a fish school. The target detection module is configured to calculate a range of the fish school by searching, in a search range associated with the fish school, echo connections in the echo signals of the fish school in the plurality of adjacent reception spaces. Searching comprises determining whether or not a strong echo area exists in an adjacent reception space having an echo position with a same depth and a same distance as at least one echo position included in this strong echo area in a reference reception space. The search range associated with the fish school is adjustable.

According to the SONAR device of the present embodiment, since the search range of the fish school for searching echo connections in the echo signals of the fish school is adjustable, when searching echo connections in the echo signals of the fish school, range of other targets such as a wake of a ship can be excluded from the search range of the fish school. Therefore, the fish school in the water can be searched efficiently.

The SONAR device according to the present embodiment further includes a target position prediction module configured to calculate a predicted position of the fish school based on the echo signals of the fish school acquired from at least two previous pings, by calculating a displacement vector of the fish school based on a range of the fish school calculated at least for two previous pings, wherein the predicted position comprises a predicted range, which is obtained by moving the range of the fish school calculated in a previous ping, in accordance with the displacement vector. The target detection module is configured to adjust the search range of the fish school based on the predicted position of the fish school.

Since the search range for searching fish school echo connections is adjusted based on the predicted position of the fish school, the search range can be appropriately adjusted. Therefore, the fish school in the water can be searched efficiently.

The echo signal acquisition module is configured to acquire from the ping, echo signals of a second underwater target, different from the fish school. Further the target detection module is configured to adjust the search range of the fish school based on a position of the second underwater target.

In the calculation of the range of the fish school, the range of the second underwater target can be excluded from the search range of echo connections. Therefore, the range of the fish school can be appropriately calculated.

The target detection module is further configured not to include in the search range of the fish school, a position of the second underwater target, when the position of the second underwater target is different from the predicted position of the fish school.

Within the position of the second underwater target, since a position where a fish school is not predicted to be positioned is excluded from the search range of the fish school, echo connections in the fish school echo signals can be searched properly.

In another configuration, the target position prediction module may calculate the predicted position of the fish school further based on a displacement of a ship on which the SONAR device is to be installed, from a previous ping, to a present ping.

According to this configuration, the predicted position of the fish school with reference to the ship can be accurately calculated, and as a result, the search range of the fish school can be appropriately adjusted.

According to another embodiment, the target detection module may also be configured to include in the search range of the fish school a position of the second underwater target, when the position of the second underwater target is the predicted position of the fish school.

According to this configuration, within the position of the second underwater target, since a position where a fish school is predicted to be positioned is included in the search of the fish school, echo connections in the fish school echo signals can be searched properly.

In another embodiment, the second underwater target is, for example, a wake of a ship on which the SONAR device is to be installed.

In yet another embodiment, the position of the wake of the ship may be calculated from the echo signals.

The position of the wake of the ship may also be calculated from past positions of the ship.

To that end, the position of the wake of the ship can be calculated substantially accurately, and the range of the wake of the ship can be appropriately excluded from the range of the search of the fish school echoes (also referred to as "search range of the fish school"). Therefore, the range of the fish school can be calculated appropriately.

According to some embodiments, the SONAR device may further include a target size calculation module. The target size calculation module may be configured to calculate a current size of the fish school based on the echo signals of the fish school acquired from the ping and calculate an increase in size of the fish school by comparing the current size of the fish school with a past size of the fish school calculated in a past ping. The target detection module may adjust the search range of the fish school when the increase in the size of the fish school is more than a given threshold.

According to this configuration, when it is estimated that the range of the fish school has rapidly increased because the echoes of the fish school have connected to the echoes of another target, the search range of fish school echo connections is adjusted. Therefore, fish school echo connections can be appropriately searched, and the range of the fish school can be appropriately calculated.

In yet another embodiment, the SONAR device may further comprise a target position calculation module. The target position calculation module may be configured to calculate a current position of the fish school based on the echo signals of the fish school acquired from the ping and calculate a displacement of the fish school by comparing the current position of the fish school with a past position of the fish school calculated in a past ping. The target detection module may adjust the search range of the fish school when the displacement is more than a given threshold.

According to this configuration, when there is a high possibility that the fish school echoes have connected to the echoes of another target because the displacement amount of the fish school is large, the search range of fish school echo connections is adjusted. Therefore, fish school echo connections can be properly searched.

In another embodiment, the SONAR device may further include an image generation module configured to generate an image that displays the echo signals acquired from the ping, and the calculated range of the fish school.

According to this configuration, the user can grasp the state of echo signals and the range of the fish school in the water from the displayed image.
A second aspect of the invention relates to a target detection method. The target detection method according to this aspect includes acquiring echo signals from a ping, from a plurality of reception spaces adjacent to each other, the echo signals being of a target comprising a fish school; and calculating a range of the fish school by searching, in a search range associated with the fish school, echo connections in the echo signals of the fish school in the plurality of adjacent reception spaces, wherein searching comprises determining whether or not a strong echo area exists in an adjacent reception space having an echo position with a same depth and a same distance as at least one echo position included in this strong echo area in a reference reception space. The search range associated with the fish school is adjustable. The method furhter includes calculating a predicted position of the fish school based on the echo signals of the fish school acquired from at least two previous pings, by calculating a displacement vector of the fish school based on a range of the fish school calculated at least for two previous pings, wherein the predicted position comprises a predicted range, which is obtained by moving the range of the fish school calculated in a previous ping, in accordance with the displacement vector; adjusting the search range of the fish school based on the predicted position of the fish school; acquiring from the ping, echo signals of a second underwater target different from the fish school; adjusting the search range of the fish school based on a position of the second underwater target; and not including in the search range of the fish school, a position of the second underwater target, when the position of the second underwater target is different from a predicted position of the fish school.

According to the target detection method according to this aspect, the same effect as that of the SONAR device can be obtained and accordingly the fish school in the water can be searched efficiently.

A third aspect of the invention relates to a non-transitory computer-readable medium having stored thereon computer-executable instructions which, when executed by a computer, cause the computer to acquire echo signals from a ping, from a plurality of reception spaces adjacent to each other, the echo signals being of a target comprising a fish school; and calculate a range of the fish school by searching, in a search range associated with the fish school, echo connections in the echo signals of the fish school in the plurality of adjacent reception spaces, wherein searching comprises determining whether or not a strong echo area exists in an adjacent reception space having an echo position with a same depth and a same distance as at least one echo position included in this strong echo area in a reference reception space. The search range associated with the fish school is adjustable. The computer-executable instructions also cause the computer to; calculate a predicted position of the fish school based on the echo signals of the fish school acquired from at least two previous pings, by calculating a displacement vector (MV10) of the fish school based on a range of the fish school calculated at least for two previous pings, wherein the predicted position comprises a predicted range, which is obtained by moving the range of the fish school calculated in a previous ping, in accordance with the displacement vector; adjust the search range of the fish school based on the predicted position of the fish school; acquire, from the ping, echo signals of a second underwater target different from the fish school; adjust the search range of the fish school based on a position of the second underwater target; and not include in the search range of the fish school, a position of the second underwater target, when the position of the second underwater target is different from a predicted position of the fish school.

According to this third aspect, the same effect as that of the SONAR device can be obtained and the fish school in the water can be searched efficiently.

As described above, according to the present invention, it is possible to provide a SONAR device, a target detection method, and a program capable of properly searching for fish school in water.

The effect or significance of the present invention will be further clarified by the description of the following embodiments. However, the embodiments shown below are only examplary embodiments of the present invention, and the present invention is not limited to the embodiments described below.

FIG. 1 is a diagram schematically illustrating a state in which water is searched using a SONAR device, according to an embodiment;
FIGS. 2(a), 2(b), 2(c), and 2(d) are diagrams schematically illustrating examples of echo images, according to an embodiment;
FIG. 3 is a block diagram illustrating a configuration of a SONAR device, according to an embodiment;
FIG. 4 is a diagram illustrating a configuration of a search image generated by an image generation module, according to an embodiment;
FIG. 5(a) is a diagram schematically illustrating a method in which a control module adjusts a search range of echo connections when updating a range of a fish school selected by a user, according to an embodiment;
FIG. 5(b) is a diagram schematically illustrating a method in which a control module adjusts a search range of echo connections when updating a range of a wake selected by a user, according to an embodiment;
FIG. 6 is a flowchart illustrating a process for displaying an echo image, according to an embodiment;
FIG. 7 is a flowchart illustrating a process when a user has selected a fish school and a wake on an echo image, according to an embodiment;
FIG. 8 is a flowchart illustrating a process for fish school range and wake range calculation, according to an embodiment;
FIG. 9(a) is a flowchart illustrating a calculation process of a predicted position of a fish school, according to an embodiment;
FIG. 9(b) is a flowchart illustrating an adjustment process of a search range, according to an embodiment;
FIG. 10 is a block diagram illustrating a configuration of a SONAR device, according to a first modification;
FIG. 11 is a flowchart illustrating a calculation process of the ranges of the fish school and the wake, according to the first modification;
FIGS. 12(a), 12(b), 12(c), and 12(d) are diagrams each schematically illustrating a vicinity check pattern used in an expansion/contraction process, according to a second modification;
FIG. 13(a) is a diagram schematically illustrating a calculation process of a range of a wake, according to a third modification;
FIG. 13(b) is a diagram schematically illustrating a process of setting gaps between ranges of the wake to the range of the wake, according to the third modification;
FIG. 14(a) is a flowchart illustrating a calculation process of the ranges of the fish school and the wake, according to a fourth modification; and
FIG. 14(b) is a flowchart illustrating a process for adjusting a search range, according to the fourth modification.

Embodiments of the present invention will be described below with reference to the drawings. For convenience, the drawings are appropriately marked with mutually orthogonal XYZ axes. The X-axis direction and the Y-axis direction are horizontal, and the Z-axis direction is vertical. The positive Y-axis direction is the direction in which a ship advances.

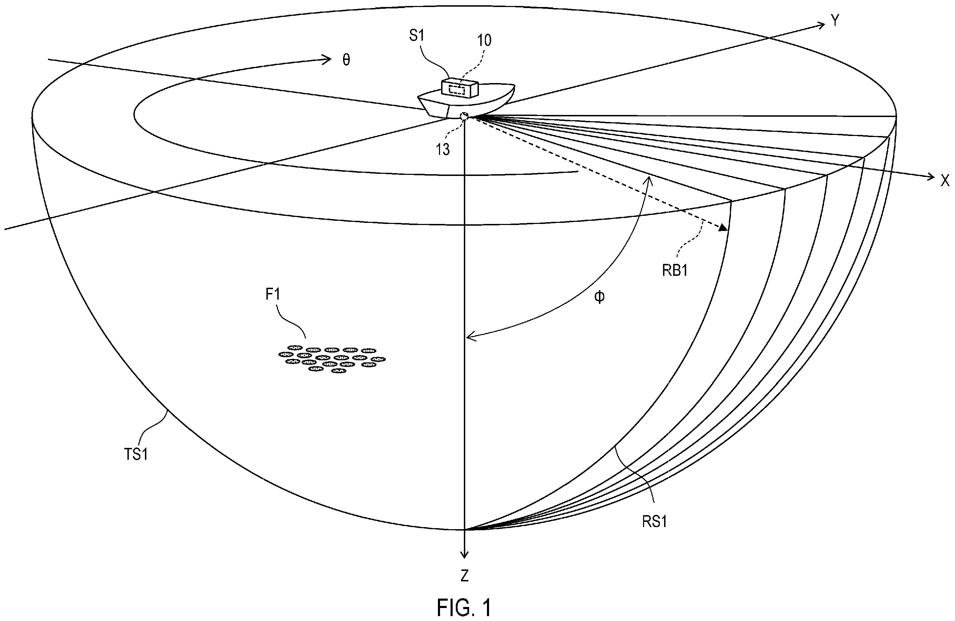

FIG. 1 is a diagram schematically illustrating a state in which water is searched by a SONAR device 10, according to an embodiment.

In FIG. 1, θ is an azimuth angle about a transducer 13 installed at the bottom of a ship S 1, and ϕ is a depression angle from a horizontal plane (X-Y plane).

The SONAR device 10 includes the transducer 13 installed at the bottom of the ship S 1. An ultrasonic wave is transmitted from the transducer 13 to a hemispherical transmission space TS1, and a reflected wave is received by the transducer 13. The transducer 13 includes a plurality of ultrasonic transducer elements. The ultrasonic transducer elements are arranged, for example, in a hemispherical shape or a cylindrical shape. A reception signal corresponding to the intensity (echo intensity) of the reflected wave received by each ultrasonic transducer element is generated for each ultrasonic transducer element. The sonar 10 performs beamforming on the reception signals to form a plurality of reception beams RB 1 distributed in the azimuth angle θ direction and the depression angle ϕ direction.

The SONAR device 10 generates the plurality of reception beams RB 1 in a fan-shaped reception space RS 1 extending in the depression angle ϕ direction. In each reception space RS 1, the plurality of reception beams RB1 are formed at a given resolution in the depression angle ϕ direction. The reception spaces RS 1 are set at a given pitch over the entire circumference in the azimuth θ direction. The actual pitch of the reception spaces RS 1 is smaller than the pitch illustrated in FIG. 1. In the reception space RS 1, the extent of the angle in the depression angle ϕ direction is 90 degrees.

The SONAR device 10 acquires echo intensity at a given distance resolution for each reception beam RB1 formed in the reception space RS 1. Thus, the echo intensity is acquired at the given distance resolution for each depression angle of each reception beam RB1. The SONAR device 10 integrates echo intensities of respective depression angles and respective distances acquired for each reception space RS 1 with respect to a plurality of adjacent reception spaces RS 1, thereby acquiring echo signals in which echo intensities are distributed in a three-dimensional manner in the transmission space TS1.

The SONAR device 10 uses the acquired echo signal to cause a display module to display an echo image showing a three-dimensional distribution of the echo intensity. Each three-dimensional position on the echo image is colored according to the echo intensity. For example, a color (for example, red) associated with a high echo intensity is assigned to position of fish school F1 on the echo image. A user can grasp a target such as fish school F1 by referring to the distribution of colors on the echo image.

The user can select fish school F1 on the echo image. When the user selects the position of fish school F1 on the echo image, the SONAR device 10 sets a range where the echoes are connected from the selected position as the range of the fish school. Here, the user selected position is specified by the azimuth angle θ, the depression angle ϕ, and the distance from the transducer 13.

The process for calculating the range of the fish school includes a binarization process. The binarization process is used for binarizing the intensity of the echo signal of each three-dimensional position into "1" and "0" data based on a given threshold. Further an expansion/contraction process is perfomed for the data obtained by the binarization process.

In the binarization process, all echo signals distributed in three dimensions are compared with the given threshold value. "1" is set at a three-dimensional position where the echo signal is equal to or greater than the given threshold value, and "0" is set at a three-dimensional position where the echo signal is less than the given threshold value. The expansion/contraction process is performed to the binarized data for each reception space RS 1.

In the expansion process of the expansion/contraction process, among the three-dimensional positions (hereinafter referred to as "echo positions") at which the respective echo signals are obtained, if at least one data of "1" exists at the echo position itself or at an echo position in the vicinity of the echo position to be processed, a "1" is set at the echo position to be processed. In the contraction process of the expansion/contraction process, if at least one data of "0" exists at the echo position itself or at an echo position in the vicinity of the echo position to be processed, a "0" is set at the echo position to be processed.

For all echo positions included in reception space RS 1, expansion/contraction process combining expansion process and contraction process is sequentially performed. Thus, by the expansion/contraction process, the echo position with a "0" surrounded by a "1" disappears. Thus, for each reception space RS 1, a strong echo area containing only "1" is generated.

This process is performed on the reception space RS 1 including the position selected by the user, whereby a strong echo area including the selected position is generated in this reception space RS 1. The reception space RS 1 (hereinafter referred to as "adjacent reception space RS1") adjacent to this reception space RS1 (hereinafter referred to as "reference reception space RS1") is searched for an echo connection with this strong echo area.

That is, it is determined whether or not a strong echo area exists in the adjacent reception space RS 1 having an echo position with the same depth and same distance (distance from transducer 13) as at least one echo position included in this strong echo area in the reference reception space RS1. If this determination is YES, it is estimated that the strong echo area of the adjacent reception space RS1 is connected to the strong echo area of the reference reception space RS1.

Further, the adjacent reception space RS1 is made the reference reception space RS1, and the reception space RS1 adjacent to it is made the adjacent reception space RS1, and the same process as above is performed to further search for connection with the strong echo area. This process is repeated by shifting the reference reception space RS1 and the adjacent reception space RS1 sequentially to the adjacent ones until the determination becomes NO. Thus, a series of strong echo areas connected to the strong echo area including the user selected position is identified.

The group of echo signals in the strong echo areas thus identified is calculated as the range of the fish school F1 selected by the user. A fish school label is set in the calculated range of the fish school F1. The SONAR device 10 adds a given color (for example, white) different from colors indicating echo intensity to a contour line of the calculated range of the fish school F1. Thus, the range of the fish school F1 selected by the user is clarified on the echo image.

One complete transmission and reception process is referred to herein as a ping. Then, when the next transmission and reception process (that is, the next ping process) is performed, the SONAR device 10 calculates a center of gravity of the range of the fish school F1 calculated in the previous ping. This calculation may instead be performed in the previous ping in some embodiments. That is, the SONAR device 10 may calculate, for each ping, the range of the fish school F1 and the center of gravity of the calculated range of the fish school F1.

Then, the SONAR device 10 calculates a strong echo area including the center of gravity by the binarization process and the expansion/contraction process described above from the echo signals acquired at the present ping with respect to the reception space RS 1 including the center of gravity. Further, based on this strong echo area, the SONAR device 10 performs the search process described above to identify a series of strong echo areas in which echoes are connected to the strong echo area including the center of gravity.

Accordingly, a corresponding label is set to the group of the identified strong echo areas. Thus, the new range of the fish school F1 on the echo image is given the given color (e.g., white). Thus, for each ping, the range of the fish school F1 displayed on the echo image is updated. Thus, the user can grasp the movement of the fish school that they selected.

A process for calculating and displaying fish school range is described in Japanese Patent Application JP2020-008519. However, the process for calculating and displaying the fish school range is not necessarily limited to the above process, and other process may be used as long as connection of echoes between adjacent reception spaces RS1 is searched to calculate the fish school range.

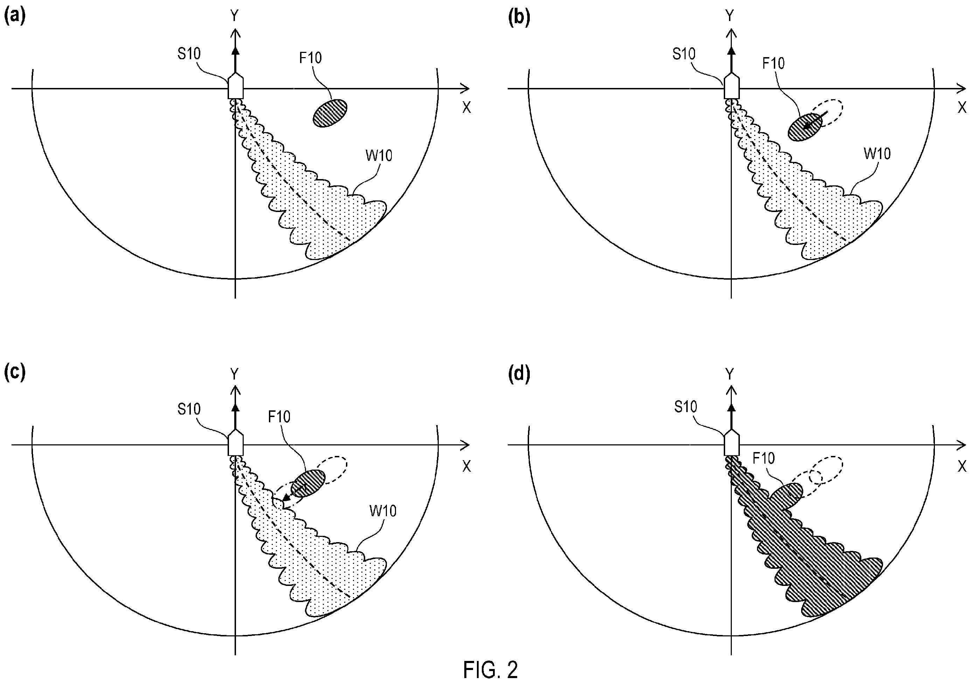

FIGS. 2(a), 2(b), 2(c) and 2(d) are diagrams schematically illustrating examples of echo images displayed by the above process, according to an embodiment.

FIGS. 2(a), 2(b), 2(c) and 2(d) illustrate echo images when the distribution of echo intensity is viewed in the positive Z-axis direction (vertically down direction). For convenience, only about half of the echo images on the negative side of the Y-axis are illustrated in FIGS. 2(a), 2(b), 2(c) and 2(d).

As illustrated in FIG. 2(a), the echo image includes, in addition to the image of ship S10, the range of fish school F10 and a range of wake W10 of the ship S10 as ranges of high echo intensity. In the range of wake W10, the echo intensity is high due to the reflected wave from bubbles coming from a stem of the ship. The range of wake W10 includes bubbles originating from the stem of the ship.

FIG. 2(a) illustrates a state in which the fish school F10 is selected by the user. Therefore, the outline of the fish school F10 is colored differently from colors corresponding to echo intensity. In this case, when the fish school F10 moves toward the wake W10, the fish school F10 approaches the wake W10 several pings later, as illustrated in FIG. 2(b). Thereafter, after several more pings, as illustrated by a chain line in FIG. 2(c), the range of the fish school F10 overlaps the range of the wake W10.

In this case, in the above-described process, since the range of the fish school F10 is calculated by tracking connection of echoes between the adjacent reception spaces RS1 (shown in FIG. 1), echo connection is detected not only in the range of true fish school F10 but also in the range of the wake W10. As a result, the range of echo connection extends not only to the fish school F10 itself but also to the wake W10. As a result, as illustrated in FIG. 2(d), a large range in which the fish school F10 and the wake W10 are connected is searched and displayed as one range for the fish school F10.

In the present embodiment, a process capable of properly searching for fish school in water is performed while avoiding such problem. Specifically, by adjusting the range for searching fish school, search of echo connection in the range of the wake is controlled.

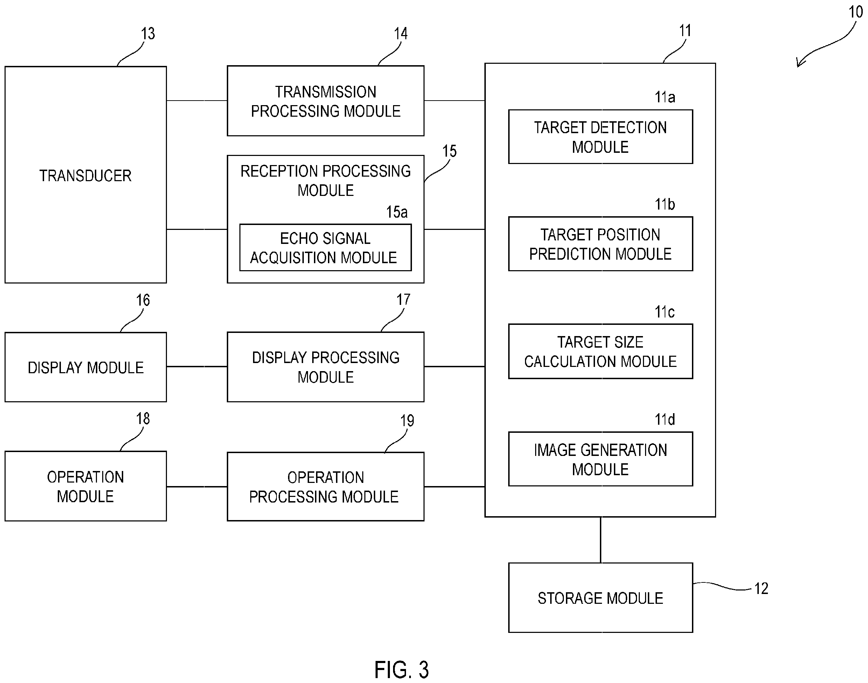

FIG. 3 is a block diagram illustrating a configuration of the SONAR device 10, according to the present embodiment.

The SONAR device 10 comprises a control module 11, a storage module 12, the transducer 13, a transmission processing module 14, a reception processing module 15, a display module 16, a display processing module 17, an operation module 18, and an operation processing module 19. The transducer 13 is installed at the bottom of the ship S1 as described above, and other components such as the control module 11 are installed in the wheelhouse or the like of ship S1.

The control module 11 includes an arithmetic processing circuit, such as a CPU (Central Processing Unit), and executes control processing described later by a program stored in the storage module 12. The storage module 12 includes a storage medium such as a ROM (Read Only Memory), a RAM (Random Access Memory), and a hard disk. The storage module 12 stores a program for the control module 11 to execute control processing.

The transducer 13 includes the plurality of ultrasonic transducer elements as described above. The ultrasonic transducer elements are arranged in a hemispherical shape or a cylindrical shape, and at each ping, an ultrasonic wave is transmitted to the transmission space TS1 in FIG. 1, and the reflected wave is received by each ultrasonic transducer element.

The transmission processing module 14 is configured to output a transmission signal to the transducer 13 for transmitting the ultrasonic wave in response to the control from the control module 11. The reception processing module 15 is configured to process a reception signal outputted from each ultrasonic transducer element of the transducer 13 which receives the reflected wave of the ultrasonic wave, to generate an echo signal, and to output the generated echo signal to the control module 11.

The reception processing module 15 includes an echo signal acquisition module 15a that processes the reception signal to obtain the echo signal. The echo signal acquisition module 15a performs beamforming on the reception signal outputted from each ultrasonic transducer element to form the plurality of reception beams distributed in the azimuth angle θ direction and the depression angle ϕ direction. The acquisition module is further configured to acquire echo signals in the direction of each reception beam (given direction of azimuth angle θ and depression angle ϕ) captured by the reception processing module 15.

An echo signal acquired for each reception beam is a signal indicating an echo intensity which changes according to the elapsed time from the transmission timing of the ultrasonic wave. The elapsed time from the transmission timing corresponds to the distance from transducer 13, in the direction of each reception beam. The control module 11 acquires the echo intensity of each distance position in the direction of each reception beam, from the echo signal of each reception beam, by associating the elapsed time from the transmission timing with the distance. The echo intensity is acquired at a given distance resolution.

The display module 16 is associated with a corresponding display device, such as a liquid crystal display device. Alternately, the display module 16 and the operation module 18 may be constituted of a liquid crystal panel in which a touch panel is superposed on a liquid crystal display.

In response to the control from the control module 11, the display processing module 17 causes the display module 16 to display an image. The operation module 18 includes input means such as an operation key and a mouse. In response to the control from the control module 11, the operation processing module 19 outputs a signal corresponding to an input operation to be performed. The input operation may be configured to transmit an input signal from the operation module 18 to the control module 11.

The SONAR device 10 also comprises the storage module 12, which includes a program stored in the storage module 12. The program provides a target detection module 11a, a target position prediction module 11b, a target size calculation module 11c, and an image generation module 11d, wherein each of the modules is configured to perform different functions associated with the control module 11.

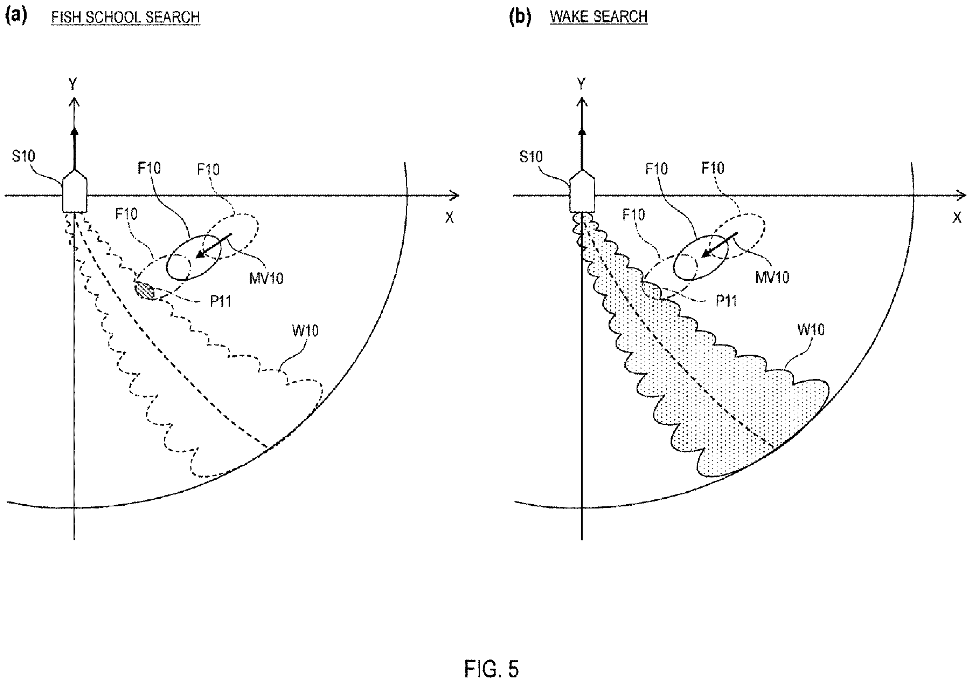

The target detection module 11a is configured to calculate the range of the fish school by searching connection of echoes in the echo signals of the fish school in the plurality of adjacent reception spaces RS1. The search process of the fish school is the same as the above-described processing. However, in this embodiment, the range of the search of the fish school in the target detection module 11a is adjustable. A method of adjusting the range of the search of the fish school in the target detection module 11a will be described later with reference to FIG. 5(a).

Further, the target detection module 11a is configured to calculate the range of another target, such as a second target, different from the fish school, by searching connection of echoes in the echo signals of the other target in the adjacent reception spaces RS1. The other target is, for example, the wake W10 of the ship S10 shown in FIG. 2. The search process of the other target is the same as the search process of the fish school. The range of the search for the other target in the target detection module 11a is also adjustable. A method of adjusting the range of the search of the other target in the target detection module 11a will be described later with reference to FIG. 5(b).

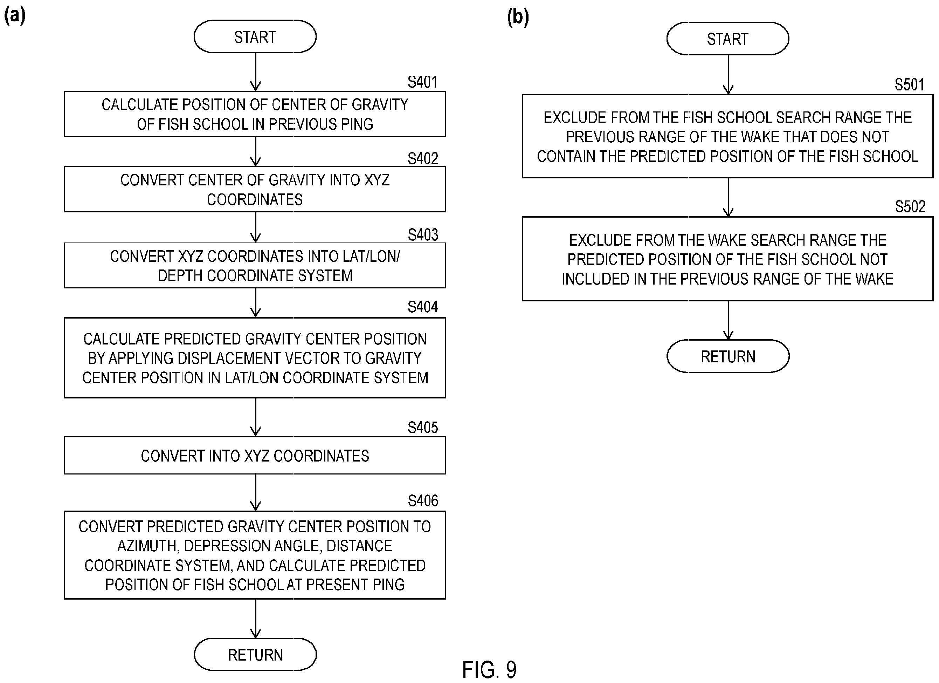

The target position prediction module 11b is configured to calculate a predicted position of the fish school in a present ping based on fish school echo signals acquired from at least two previous pings. The target position prediction module 11b further calculates the predicted position of the fish school based on a displacement of the ship S1 on which the SONAR device 10 is installed. The calculation process of the predicted position in the target position prediction module 11b will be described later with reference to FIG. 9(a).

The target size calculation module 11c is configured to calculate a current size (volume) of the fish school based on the echo signals from the fish school acquired from the present ping, and calculates an increase in fish school size by comparing a past size of the fish school calculated in a past ping with the current size of the fish school calculated in the present ping.

The image generation module 11d is configured to generate an image (hereinafter referred to as "search image") that displays the echo signals acquired from the present ping and the calculated range of the fish school. The generated search image is displayed by the display processing module 17 on the display module 16.

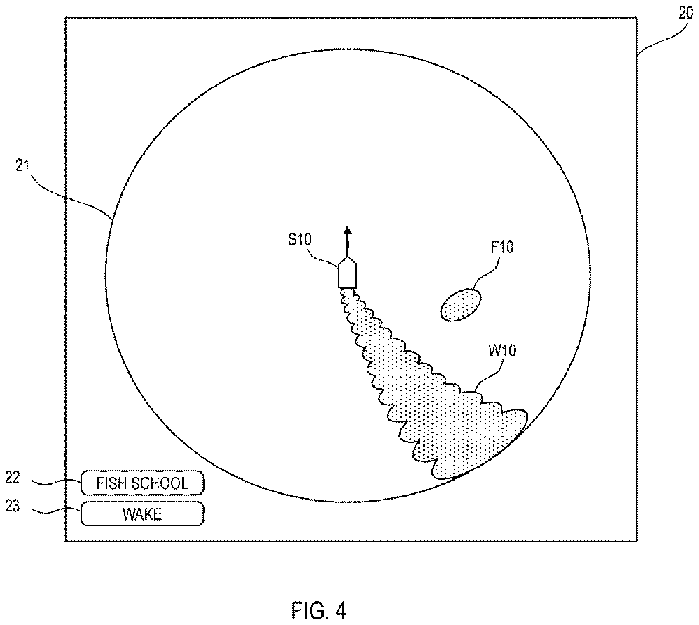

FIG. 4 is a diagram illustrating a configuration of a search image 20 generated by the image generation module 11d.

The search image 20 includes an echo image 21 and two icons 22, 23. The icon 22 corresponds to the fish school, such as the fish school F10, and the icon 23 corresponds to the wake, such as the wake W10, in the illustrated FIG. 4.

The user selects the fish school F10 and the wake W10 while the fish school F10 and the wake W10 are separated on the echo image 21. When selecting the fish school F10, the user operates the operation module 18 of FIG. 3, clicks the icon 22, and then clicks the position of the fish school F10. When selecting the wake W10, the user operates the operation module 18 of FIG. 3, clicks the icon 23, and then clicks the position of the wake W10. When unselecting, the user clicks the position of the target (fish school or wake) to be unselected.

When the fish school F 10 is selected, a fish school clear button may also be displayed, and when the button is clicked, the fish school F10 may be unselected. Also, when the wake W10 is selected, a wake clear button may be displayed, and when the wake clear button is clicked, the wake W10 may be unselected.

When the fish school F10 is selected by the user, by the function of the target detection module 11a, the control module 11 executes the binarization process and the expansion/contraction process described above based on the selected position, and further searches for connection of echoes between the plurality of adjacent reception spaces RS 1, to calculate the range of the fish school F10. Then, by the function of the image generation module 11d, the control module 11 adds the given color to the outline of the range of the fish school F10 and displays it on the echo image 21. Then, by the function of the target detection module 11a, the control module 11 updates the range of the fish school F10 in subsequent pings. The updating method of the range of the fish school F10 is the same as described above.

When the wake W10 is selected by the user, by the function of the target detection module 11a, the control module 11 executes the binarization process and the expansion/contraction process described above based on the selected position, and further searches for connection of echoes between adjacent reception spaces RS 1 to calculate the range of the wake W10.

Then, by the function of the target detection module 11a, the control module 11 updates the range of the wake W10 in subsequent pings. The update of the range of the wake W10 is the same as the update of the range of the fish school F10, and is done by performing the binarization process and the expansion/contraction process based on the center of gravity of the range of the wake W10 calculated in the previous ping, and by searching for connection of echoes between the plurality of adjacent reception spaces RS 1.

### < Adjustment of range of search >

FIG. 5(a) is a diagram schematically illustrating a method in which the control module 11 adjusts the search range of the echo connection when updating the range of the fish school F10 selected by the user. FIG. 5(b) is a diagram schematically illustrating a method in which the control module 11 adjusts the search range of the echo connection when updating the range of the wake W10 selected by the user.

In FIGS. 5(a) and 5(b), the range of the fish school F10 calculated in the previous ping (one ping before) is indicated by a solid ellipse, and the range of the fish school F10 calculated two pings before is indicated by a broken ellipse. The predicted position of the fish school F10 in the present ping is indicated by an ellipse with a dashed-dotted line.

First, with reference to FIG. 5(a), a method of adjusting the search range (range for searching the echo connection between adjacent reception spaces RS 1) for calculating the range of the fish school F10 will be described.

By the function of the target position prediction module 11b, the control module 11 calculates the predicted position (predicted range) of the fish school F10 based on echo signals of the fish school F10 acquired from at least two previous pings.

More specifically, the control module 11 calculates a displacement vector MV10 (displacement direction and displacement amount) of the fish school F10 based on the range of the fish school F10 calculated at least for two previous pings. For example, the control module 11 calculates the center of gravity of the range of the fish school F10 calculated in the preceding two pings, and acquires the displacement vector MV10 as a displacement vector between the calculated gravity centers. In this case, the control module 11 may also average displacement amounts of a plurality of displacement vectors calculated between previous pings and set it as the displacement amount of the displacement vector MV10. The control module 11 may also adjust the displacement direction of the displacement vector MV10 from the preceding displacement vectors.

The control module 11 applies the displacement vector MV10 thus calculated to the range of the fish school F10 calculated in the previous ping to calculate the predicted position (predicted range) of the fish school F10 in the present ping. The predicted position (predicted range) is a range obtained by moving the range of the fish school F10 calculated in the previous ping in accordance with the displacement vector.

Next, by the function of the target detection module 11a, the control module 11 adjusts the search range of the fish school F10 based on the predicted position (predicted range) of the fish school F10.

More specifically, the control module 11 excludes the following range from the search range of the fish school F10 for the present ping: from among the range of the wake W10 calculated in the previous ping, a range other than overlapping range P 11 with the predicted position (predicted range) of the fish school F10 is excluded. In other words, from among the range of the wake W10 calculated in the previous ping, only the overlapping range P11 with the predicted position (predicted range) of the fish school F10 is set in the search range of the fish school F10 for the present ping, and other parts of the range of the wake W10 are excluded from the search range of the fish school F 10 for the present ping. The range other than the range of the wake W10 calculated in the previous ping is also set to the search range of the fish school F10 for the present ping.

Thus, when the search range of the fish school F10 is adjusted, the search of echo connections in the range of the wake W10 is prevented in the calculation of the range of the fish school F10. For this reason, improper calculation and improper display that extends the range of the fish school F10 into the range of the wake W10 is suppressed. Further, in the range of the wake W10, since the overlapping range P11 with the predicted position (predicted range) of the fish school F10 is searched in the calculation of the range of the fish school F10, the range of the fish school F10 having a missing part is suppressed. Therefore, the range of the fish school F10 can be appropriately calculated and displayed.

Next, with reference to FIG. 5(b), a method of adjusting the search range (that is to say, a range for searching the echo connection between adjacent reception spaces RS1) for calculating the range of the wake W10 will be described.

By the function of the target detection module 11a, the control module 11 adjusts the search range of the wake W10 based on the predicted position (predicted range) of the fish school F10.

More specifically, the control module 11 excludes the following range from the search range of the wake W10 for the present ping: within the predicted position (predicted range) of the fish school F10, a range other than the overlapping range P11 with the range of the wake W10 calculated in the previous ping is excluded. In other words, within the predicted position (predicted range) of the fish school F10, only the overlapping range P11 with the range of the wake W10 calculated in the previous ping is set in the search range of the wake W10 for the present ping, and other parts of the predicted position (predicted range) of the fish school F10 are excluded from the search range of the wake W10 for the present ping. The range other than the predicted position (predicted range) of the fish school F10 is also set to the search range of the wake W10 for the present ping.

Thus, when the search range of the wake W10 is adjusted, the search of echo connections in the range of the fish school F10 is prevented in the calculation of the range of the wake W10. Therefore, it is possible to prevent the range of the wake W10 from extending to the range of the fish school F10 and from being inappropriately calculated and displayed. Therefore, the range of the wake W10 can be properly displayed.

Further, within the predicted position (predicted range) of the fish school F10, since the overlapping range P11 with the range of the wake W10 calculated in the previous ping is searched in the calculation of the range of the wake W10, the range of the wake W10 having a missing part is suppressed. Therefore, the range of the wake W10 can be calculated appropriately.

### < Control Process >

Next, a specific control process executed by the control module 11 in displaying the echo image will be described. The calculation method of the ranges of the fish school and the wake in the control process is the same as the above calculation method.

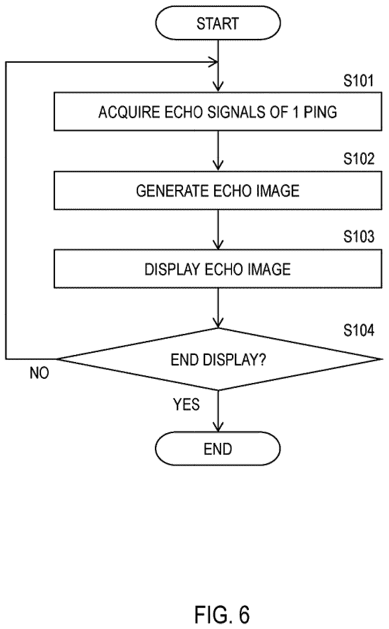

FIG. 6 is a flowchart illustrating a process for displaying the echo image.

At step S101, the control module 11 is configured to acquire echo signals of one ping through the process of the echo signal acquisition module 15a. The control module 11 is further configured to generate, at step S102, the echo image from the echo signals of the one ping by the function of the image generation module 11d. Then, at step S103, the generated echo image is displayed on the display module 16. Thereafter, the control module 11 is configured to repeat the process of steps S101 to S103 until the user performs an operation to end the display, at step S104. Thus, the echo image is updated for each ping. The echo image generated at step S 102 is changed in accordance with a viewpoint set by the user via the operation module 18.

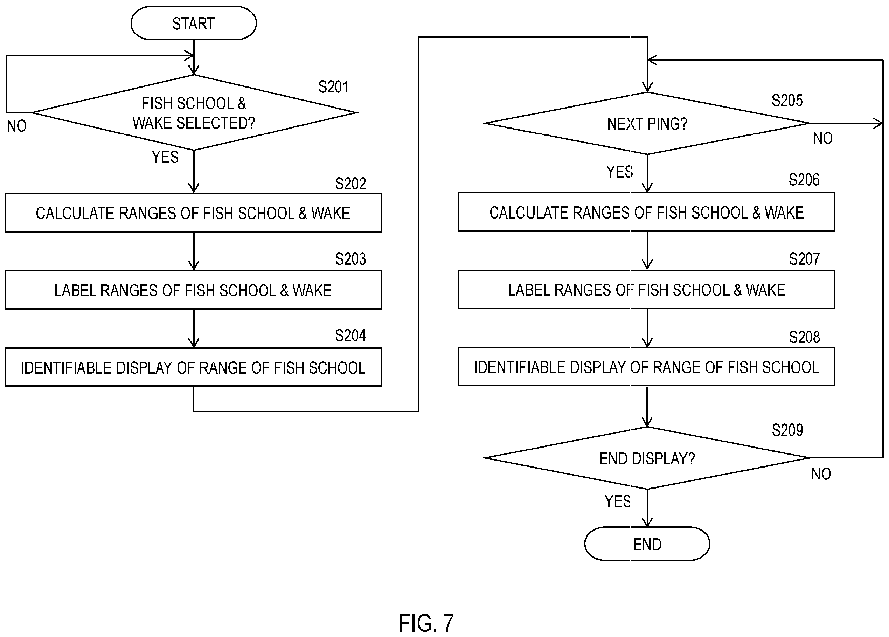

FIG. 7 is a flowchart illustrating a process when the user has selected the fish school F10 and the wake W10 on the echo image.

When the user selects the fish school F10 and the wake W10 on the echo image at step S201: YES, the control module 11 is configured to calculate, at step S202, the ranges of the selected fish school F10 and wake W10 with the above process. Further, the control module 11 is configured to attach, at step S203, the fish school label to the calculated range of the fish school F10 and further attach a wake label to the calculated range of the wake W10. Then, at step S204, the control module 11 is configured to add the given color to the outline of the labeled fish school range, and display the range of the fish school F10 so as to be identifiable. The method of displaying the range of the fish school F10 in an identifiable manner is not limited to the method of adding the given color to the outline of the range of the fish school F10.

Thereafter, when the process moves to the next ping, at step S205: YES, the control module 11 is configured to update, at steps S206 to S208, the labeled fish school and wake ranges. That is, the control module 11 is configured to calculate, at step S206, the ranges of the fish school F10 and the wake W10 at the present ping, and attach, at step S207, the fish school and the wake labels to the calculated ranges of the fish school F10 and the wake W10, respectively. Then, the control module 11 is configured, at step S208, to cause the display module 16 to display the fish school range newly labeled with the fish school label in an identifiable manner.

The control module 11 is configured to repeat the process of steps S205 to S208 until the user performs an operation to end the display at S209: NO. Thus, the range of the fish school F10 on the echo image is updated every ping.

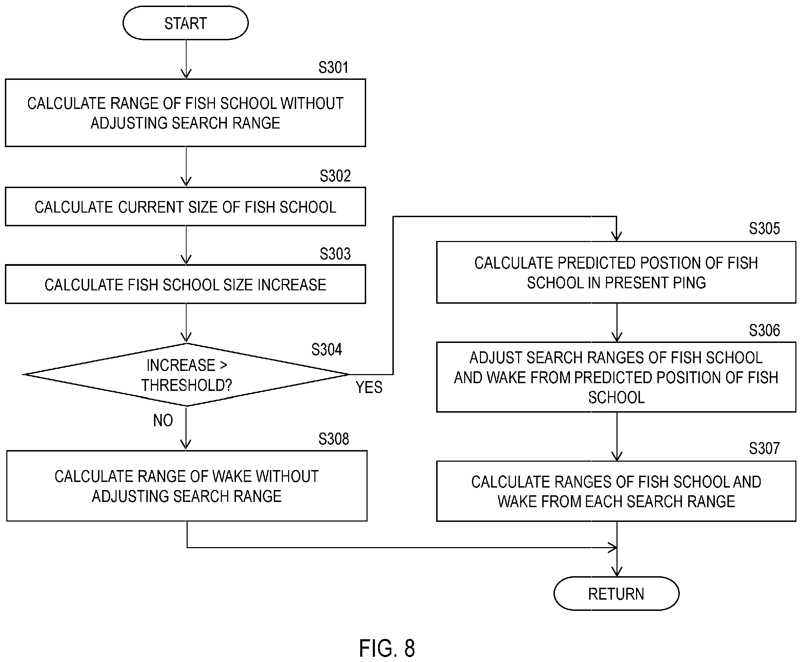

FIG. 8 is a flowchart illustrating the fish school and wake range calculation process of step S206 of FIG. 7.

In the flowchart of FIG. 8, the processing of steps S301, S304, S306, S307, and S308 is performed by the function of the target detection module 11a of the control module 11. The processing of steps S302 and S303 is performed by the function of the target size calculation module 11c of the control module 11. The processing of step S305 is performed by the function of the target position prediction module 11b of the control module 11.

In the process of FIG. 8, when the echoes of the fish school and the echoes of the wake are connected due to the proximity of the fish school and the wake, the range for searching echo connection of the fish school and the range for searching echo connection of the wake are adjusted. Also, when the echoes of the fish school and the echoes of the wake are not connected when the fish school and the wake are far apart, the range for searching echo connection of the fish school and the range for searching echo connection of the wake are not adjusted.

First, the control module 11 is configured to calculate, at step S301, the range of the fish school F10 to which the label is attached without adjusting the search range. Next, at step S302, the control module 11 is configured to calculate the size (volume) of the calculated fish school range. Then, at step S303, the control module 11 is configured to compare the size of the fish school range calculated this time or in a present ping, with the size of the fish school range calculated in the previous ping, and to calculate an increase in the size (which may also be referred to as a size increase) of the fish school. Then, at step S304, the control module 11 is configured to determine, whether or not the increase in size exceeds a given threshold. The increase is calculated by subtracting the previous size (volume) of the fish school from the current size (volume) of the fish school. The threshold is set based on a range of increase in fish school size that can occur when fish school echoes connect to wake echoes.

When the increase exceeds the given threshold, then at step S304: YES, it is estimated that the size of the fish school range has rapidly increased because the echoes of the wake have connected to the echoes of the fish school. Accordingly, the control module 11 is configured to adjust the search range of the fish school to calculate the range of the fish school again, and to further adjust the search range of the wake to calculate the range of the wake.

Specifically, at step S305, the control module 11 is configured to calculate the predicted position of the fish school in the present ping based on fish school echo signals acquired from at least two previous pings. As described with reference to FIGS. 5(a) and 5(b), at step S306, the control module 11 is configured to adjust the search ranges of the fish school F10 and the wake W10 from the predicted position of the fish school F10. Further at step S307, the control module 11 is configured to search echo connections in each adjusted search range, and to calculate the ranges of the fish school F10 and the wake W10. The control module 11 is further configured to acquire the ranges of the fish school F10 and the wake W10 calculated at step S307 as the ranges of the fish school and the wake in the present ping, respectively.

On the other hand, when the increase does not exceed the given threshold at step S304: NO, it is estimated that the echoes of the fish school are not connected to the echoes of the wake. Accordingly, at step S308, the control module 11 is configured to calculate the range of the wake without adjusting the search range. In this case, the control module 11 is configured to acquire the range of the fish school calculated at step S301 and the range of the wake calculated at step S308 as the ranges of the fish school F10 and the wake W10 in the present ping, respectively.

FIG. 9(a) is a flowchart illustrating a calculation process of the predicted position of the fish school of step S305 of FIG. 8. The process of FIG. 9(a) is performed by the function of the target position prediction module 11b of the control module 11.

At step S401, the control module 11 is configured to calculate a position of the center of gravity of the fish school based on fish school echo signals acquired from the previous ping. The position of the center of gravity is defined by the azimuth angle θ, the depression angle ϕ, and the distance from transducer 13. Next, at step S402, the control module 11 is configured to convert the calculated position of the center of gravity into XYZ coordinates centered on its own ship (transducer 13). The XYZ coordinate system is set as illustrated in FIG. 1. Further, at step S403, the control module 11 is configured to convert the center of gravity position converted into XYZ coordinates to a position (longitude, latitude, and water depth) in the longitude/latitude coordinate system based on information from a GPS (Global Positioning System) installed in the ship S 1.

Note that the process of steps S401 to S403 may be performed during the previous ping. That is, at each ping, the control module 11 may be configured to calculate the range of the fish school F10, calculate the center of gravity of the calculated range of the fish school F10, convert the calculated center of gravity into a position (longitude, latitude, and water depth) in the longitude/latitude coordinate system, and have all this stored in the storage module 12.

Then, the control module 11 is configured to calculate the position of the center of gravity (the position in the longitude/latitude coordinate system) of the fish school F10 at each ping based on the fish school echo signals acquired from at least two previous pings and a position of the own ship at each ping. Further, the control module 11 is configured to calculate a displacement vector of the fish school F10 in the previous ping from the calculated center of gravity position of each ping. Then, at step S404, the control module 11 is configured to apply the calculated displacement vector to the center of gravity position (position in the longitude/latitude coordinate system) in the previous ping calculated at step S403 to calculate the predicted center of gravity position of the fish school in the present ping.

At step S405, the control module 11 is configured to convert the calculated predicted center of gravity position into XYZ coordinates centering on the position of the own ship in the present ping. Further, at step S406, the control module 11 is configured to convert the predicted center of gravity position converted into XYZ coordinates into azimuth angle θ, depression angle ϕ, and distance coordinates with reference to the own ship, and calculate the predicted position (predicted range) of the fish school from the converted predicted center of gravity position. The predicted position (predicted range) of the fish school F10 is calculated by applying the range of the fish school F10 calculated in the previous ping so that the center of gravity position matches the predicted center of gravity position.

In the process of FIG. 9(a), the predicted position of the fish school F10 is calculated by taking into account the displacement of the ship S 1 from the previous ping to the present ping.

That is, by the process of steps S401 to S404, the displacement of the fish school in the longitude/latitude coordinate system from the previous ping to the present ping is predicted. On the other hand, the ship S 1 moves in the longitude/latitude coordinate system from the previous ping to the present ping. At steps S405 and S406, the relationship in the longitude/latitude coordinate system between the ship S 1 after it has moved and the predicted position of the fish school is converted into the azimuth angle θ, depression angle ϕ, and distance coordinate system centered on the ship S1. Thus, taking into account the displacement of the ship S 1, the predicted position of the fish school is calculated with the position of the ship S1 (transducer 13) as reference.

FIG. 9(b) is a flowchart illustrating an adjustment process of the search range of step S306 of FIG. 8. The process of FIG. 9(b) is performed by the function of the target detection module 11a of the control module 11.

At step S501, the control module 11 is configured to exclude the range of the wake other than the predicted position of the fish school F10 calculated in the process of FIG. 9(a) from the search range of the fish school. That is, if a position of the wake is not a predicted position of the fish school, the control module 11 is configured to not include that position of the wake W10 in the search range of the fish school F10, and if a position of the wake W10 is a predicted position of the fish school F10, the control module 11 is configured to include that position of the wake W10 in the search range of the fish school F10.

In addition, at step S502, the control module 11 is configured to exclude the predicted position of the fish school F10 not included in the range of the wake calculated in the previous ping, from the search range of the wake. That is, if the predicted position of the fish school F10 is not within the range of the wake W10, the control module 11 is configured to not include that predicted position of the fish school F10 in the search range of the wake W10, and if a predicted position of the fish school F10 is within the range of the wake W10, the control module 11 is configured to include that predicted position of the fish school F10 in the search range of the wake W10.

The process illustrated in FIG. 9(b) corresponds to the process illustrated in FIGS. 5(a) and 5(b). Thus, as described above, the ranges of the fish school F10 and the wake W10 can be properly calculated, and the range of the fish school F10 can be properly displayed in the echo image.

### < Effects of the Embodiment >

According to the above embodiment, the following effects can be obtained.

As illustrated in FIG. 8, since the range for searching echo connections in the echo signals of the fish school F10 is adjustable, when searching echo connections in the echo signals of the fish school F10, the range of the wake W10 (the other target) can be excluded from the search range of the fish school F10. Therefore, the fish school F10 in the water can be searched efficiently.

As illustrated in FIG. 8, at step S305, the control module 11 (the target position prediction module 11b) is configured to calculate the predicted position of the fish school F10 in the present ping based on fish school echo signals acquired from at least two previous pings. Then, at step S306, the control module 11 (the target detection module 11a) is configured to adjust the search range of the fish school F10 in the present ping based on the calculated predicted position of the fish school F10. According to this configuration, since the search range for searching fish school echo connections is adjusted based on the predicted position of the fish school F10, the search range can be appropriately adjusted. Therefore, the fish school F10 in the water can be searched efficiently.

By the process illustrated in FIG. 9(a), as described above, the control module 11 (the target position prediction module 11b) is configured to calculate the predicted position of the fish school F10 further based on the displacement of the ship S 1 on which the SONAR device 10 is to be installed. Thus, the predicted position of the fish school F10 with reference to the ship S 1 can be accurately calculated, and as a result, the search range of the fish school F10 can be appropriately adjusted.

In the configuration of FIG. 3, the reception processing module 15 (the echo signal acquisition module 15a) acquires from the ping, echo signals from the wake (second underwater target), different from the fish school. Then, as illustrated in FIG. 9(b), at step S501, the control module 11 (the target detection module 11a) is configured to adjust the search range based on the position of the wake (second underwater target). Thus, in the calculation of the range of the fish school F10, the range of the wake W10 (second underwater target) can be excluded from the search range of echo connections.

In this case, at step S501 of FIG. 9(b), the control module 11 (the target detection module 11a) is configured to not include a position of the wake W10 (second underwater target) in the search range of the echoes of the fish school F10 unless said position of the wake W10 (second underwater target) is a position where the fish school F10 is predicted to be positioned. Thus, within the position of the wake W10 (second underwater target), since a position where the fish school F10 is not predicted to be positioned is excluded from the search range of the fish school F 10, echo connections in the fish school echo signals can be searched properly. Therefore, the range of the fish school F10 can be calculated appropriately.

Also, at step S501 of FIG. 9(b), the control module 11 (the target detection module 11a) is configured to include in the search range of the fish school F10 a position of the wake W10 (second underwater target) if said position of the wake W10 (second underwater target) is a position where the fish school F10 is predicted to be positioned. Thus, within the position of the wake W10 (second underwater target), since a position where the fish school F10 is predicted to be positioned is included in the search of the fish school F10, echo connections in the fish school echo signals can be searched properly. Therefore, the range of the fish school F10 can be calculated appropriately.

In this embodiment, as described above, the other target different than the fish school F10 is the wake of the ship S 1. Similarly to the fish school F10, the wake W10 is calculated from echo signals acquired by the reception processing module 15 (the echo signal acquisition module 15a). Specifically, a position of the wake W10 (a range of the wake) excluded from the search range of the fish school echoes is a position of the wake calculated from the echo signals in the previous ping. Thus, the position of the wake W10 of the ship S 10 can be calculated substantially accurately, and the range of the wake of the ship can be appropriately excluded from the range of the search of the fish school echoes. Therefore, the range of the fish school F10 can be calculated appropriately.

As illustrated in FIG. 8, the control module 11 (the target size calculation module 11c) is configured to calculate, at step S302, the current fish school size based on the echo signals from the fish school F10 acquired from the present ping, and calculate, at step S303, an increase in fish school size by comparing a past fish school size calculated in a previous ping with the current fish school size. Then, at step S306, the control module 11 (the target detection module 11a) is configured to adjust the search range of the fish school F10 when the increase in the size of the fish school F10 is larger than the given threshold (S304: YES). According to this configuration, when it is estimated that the range of the fish school F10 has rapidly increased because the echoes of the fish school F10 have connected to the echoes of the wake W10 (the other target), the search range of fish school echo connections is adjusted. Therefore, fish school echo connections can be appropriately searched, and the range of the fish school F10 can be appropriately calculated.

At steps S102, S103 of the process of FIG. 6, the control module 11 (the image generation module 11d) generates and displays an echo image displaying the echo signals acquired from the ping, and, at steps S204 and 5208 of the process of FIG. 7, further displays on the echo image the calculated range of the fish school selected by the user. Thus, the user can grasp the state of echo signals and the range of the fish school F10 in the water from the displayed image.

### < First Modification >

In the above embodiment, as illustrated in FIG. 8, when the size increase of the fish school F10 becomes larger than the given threshold, the search range of the fish school echoes is adjusted, but there is no limitation thereto.

For example, if a displacement amount of the fish school F10 is large, the search range of the fish school echoes may be adjusted. If the displacement amount of the fish school F10 is large in the present ping, the range of the fish school F10 may have rapidly approached the range of the wake, and the echoes of the fish school F10 may be connected with the echoes of other targets such as the wake W10. Therefore, when the displacement amount of the fish school F10 is large, the search range of the fish school echoes is adjusted by the process of steps S305 to S307, so that the search of the fish school echoes extending to the range of the wake can be surely avoided. Thus, the range of the fish school F10 can be calculated appropriately.

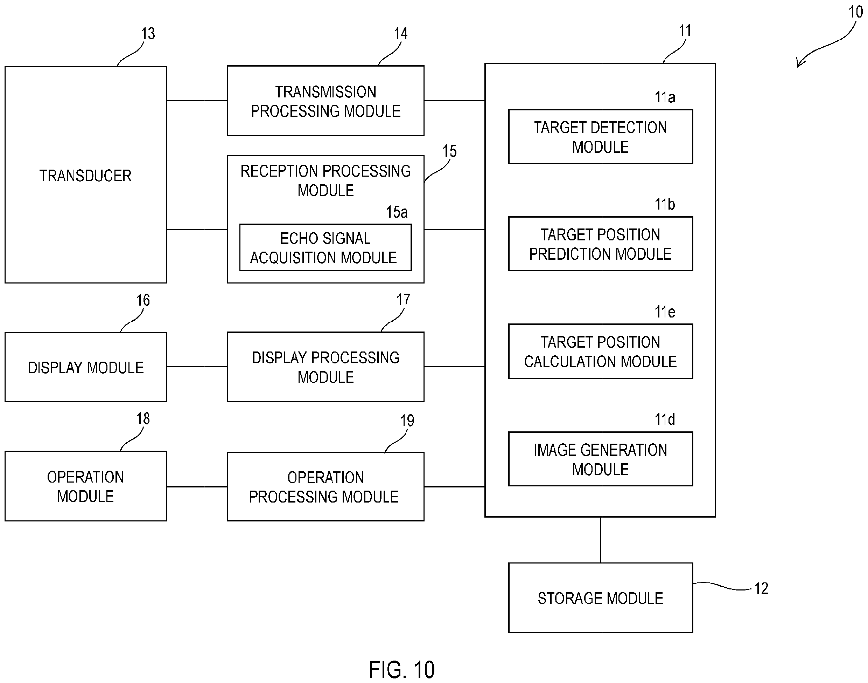

FIG. 10 is a block diagram illustrating a configuration of the SONAR device 10 according to a first modification.

In the configuration of FIG. 10, with respect to the configuration of FIG. 3, the target size calculation module 11c is replaced by the target position calculation module 11e. Other configurations of FIG. 10 are the same as the corresponding configurations of FIG. 3. The program stored in the storage module 12 provides the target position calculation module 11e configured to perform functions associated with the control module 11.

The target position calculation module 11e is configured to calculate a current position of the fish school F10 based on the echo signals from the fish school F10 acquired from the present ping, and compare a past position of the fish school F10 calculated in a past ping with the current position of the fish school F10 to calculate the displacement amount of the fish school F10.

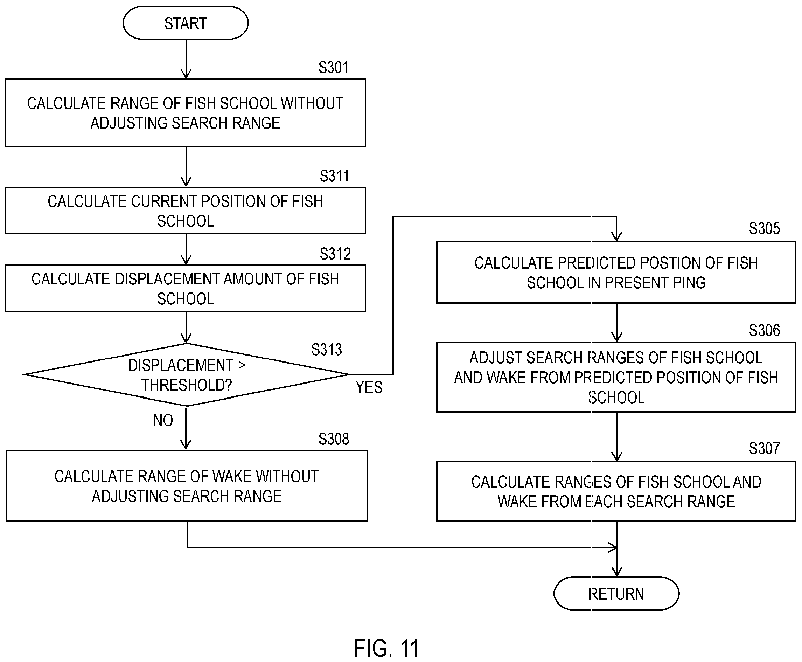

FIG. 11 is a flowchart illustrating a calculation process of the ranges of the fish school F10 and the wake W10 when adjusting the search range of the fish school echoes based on the displacement amount of the fish school F10.

In the flowchart of FIG. 11, steps S302 to S304 of the flowchart of FIG. 8 are replaced by steps S311 to S313. The other steps in FIG. 11 are the same as the corresponding steps in FIG. 8.

In the flowchart illustrated in FIG. 11, the processing of steps S301, S313, S306, S307, and S308 is performed by the function of the target detection module 11a of the control module 11. The processing of steps S311 and S312 is performed by the function of the target position calculation module 11e of the control module 11. The processing of step S305 is performed by the function of the target position prediction module 11b of the control module 11.

The control module 11 is configured to calculate, at step S301, the range of the fish school F10 in the present ping, and calculate, at step S311, the current position of the fish school F10 from the echo signals of the calculated range of the fish school F10. For example, the control module 11 is configured to calculate the center of gravity position of the range of the fish school F10 from the echo signals of the range of the fish school F10 calculated at step S301, and acquire the calculated center of gravity position as the current fish school position.

Further, at step S312, the control module 11 is configured to compare the past position of the fish school F10 calculated in the past ping with the current position of the fish school F10 to calculate the displacement amount of the fish school F10. For example, the control module 11 is configured to calculate a difference between the past position of the fish school F10 calculated in the previous ping and the current position of the fish school F10 as the displacement amount of the fish school F10. The displacement amount of the fish school F10 may also be adjusted by using a past position of the fish school F10 at a ping before the previous ping. For example, the displacement amount of the fish school F10 may be calculated by averaging the differences of fish school positions between the present ping and several pings before the present ping.

At step S313, the control module 11 is configured to determine whether or not the calculated displacement amount is greater than a given threshold. If the calculated displacement amount is greater than the given threshold at step S313: YES, the control module 11 is configured to adjust, at steps S305 and S306, the search ranges of the fish school F10 and the wake echoes, and calculate, at step S307, the ranges of the fish school F10 and the wake W10 from each adjusted search range. On the other hand, if the calculated displacement amount is not greater than the given threshold at step S313: NO, at step S308, the control module 11 is configured to calculate the range of the wake W10 without adjusting the search range. The threshold is set based on a range of fish school displacement amount that could lead to echo connection of the fish school F10 with the other target such as the wake W10.

According to the process of FIG. 11, when there is a high possibility that the fish school echoes have connected to the echoes of another target in the present ping because the displacement amount of the fish school F10 is large, the search range of fish school echo connections is adjusted. Therefore, fish school echo connections can be properly searched, and as a result, the range of the fish school F10 can be properly calculated.

The process of FIG. 11 may also be performed in parallel with the process of FIG. 8.

In addition, the search range of the echoes may be uniformly adjusted in the calculation of the ranges of the fish school F10 and the wake W10 without setting a particular condition for adjusting the search range. In this case, steps S301 to S304 and S308 are omitted from the process of FIG. 8, and only the process of steps S305 to S307 is performed. However, in this case, even if there is a large distance between the fish school F10 and the wake W10 and there is no possibility that the echoes of the fish school F10 are connected to the echoes of the wake W10, the process of steps S305 and S306 is always performed for each ping. Therefore, in order to reduce the process load of control module 11, it is preferable to perform the process of steps S305 to S307 only when connection of echoes of the fish school F10 and the wake can occur, as in the case of flowchart of FIG. 8 or FIG. 11.

### < Second Modification >

In the above embodiments, for example, as illustrated in FIG. 4, the range of the wake is continuously displayed. However, as echo intensity of the wake W10 changes, depending on a state of bubbles included in the wake W10 or depending upon reflections therefrom and the like, strong echoes may not be continuous in the range of the wake W10. Therefore, when the range of the wake W10 is calculated based on the echo intensity as described above, gaps may occur in the range of the wake W10. In this case, a range with a gap in the previous ping may change into a range of the wake W10 in the present ping. In this case, in the process of FIG. 9(b), the search range of the fish school echoes and the search range of the wake echoes cannot be stably set.

In a second modification, this problem is solved by changing a range of vicinity used for the expansion/contraction process.

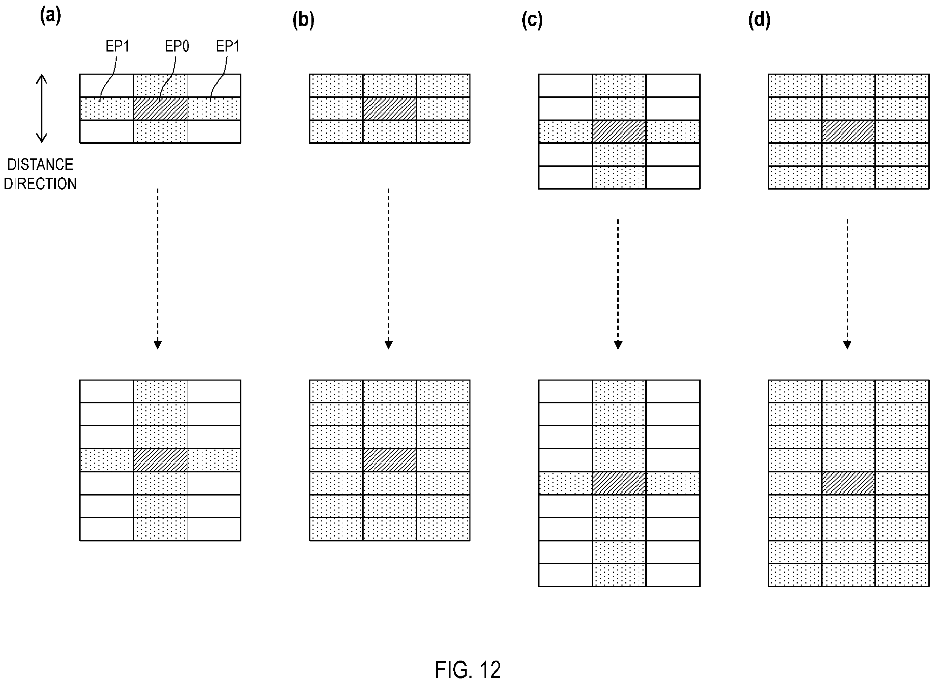

FIGS. 12(a), 12(b), 12(c), and 12(d) are diagrams schematically illustrating vicinity check patterns used in the expansion/contraction process.

For example, any of the four vicinity check patterns depicted at the top of FIGS. 12(a), 12(b), 12(c), and 12(d) may be used to search for fish school echoes in the reception spaces RS1. However, these four vicinity check patterns are merely examples, and other vicinity check patterns may be used for searching the fish school echoes.

In FIGS. 12(a), 12(b), 12(c), and 12(d), one box represents the echo position (the three-dimensional position at which the echo signal was obtained) described above. An echo position EPO hatched with hatching lines is an echo position to be processed, and an echo position EP1 hatched with dots is a position near the echo position EPO when performing the expansion/contraction process. The direction of the double sided arrow is a distance direction with respect to transducer 13.

As described above, in the expansion process of the expansion/contraction process, if there is at least one data "1" at the echo position EPO itself or the echo position EP1 near the echo position EP0, the echo position EPO to be processed is set to "1". In the contraction process of the expansion/contraction process, if there is at least one data of "0" in the echo position EPO itself or the echo position EP1 near the echo position EP0, a "0" is set at the echo position to be processed.

In the above embodiments, in the search for the fish school echoes and wake echoes in the reception spaces RS 1 the same vicinity check pattern is used. On the other hand, in the second modification, the number of vicinity checks in the vicinity check pattern used for the search of wake echoes is larger than in the vicinity check pattern used for the search of fish school echoes.

The number of vicinity checks is basically increased in the distance direction. Thus, the vicinity check pattern used for the search of wake echoes has more vicinity checks in the distance direction than the vicinity check pattern used for the search of fish school echoes.

For example, when any one of the vicinity check patterns in the upper part of FIGS. 12(a), 12(b), 12(c), and 12(d) is used for the search of the fish school echoes, the corresponding vicinity check pattern illustrated in the lower part is used for the search of the wake echoes. Thus, an echo position with a "0 " surrounded by echo positions with a " 1 " set by the binarization process can be easily processed as a position connected to the other echoes. As a result, the occurrence of a gap in the calculated range of the wake W10 is suppressed.

### < Third Modification >

In the above embodiments, the range of the wake is calculated by the user selecting the position of the wake in the echo image. On the other hand, in a third modification, the control module 11 (the target detection module 11a) automatically calculates the range of the wake W10.

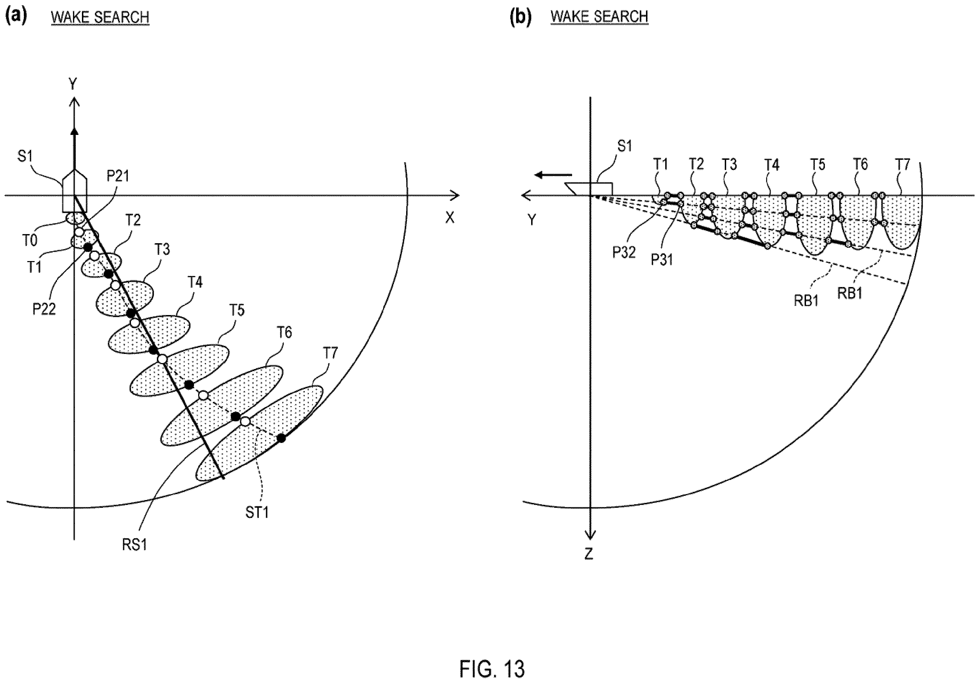

FIG. 13(a) is a diagram schematically illustrating the calculation process of the range of the wake W10. FIG. 13(b) is a diagram schematically illustrating a process of setting calculated gaps between ranges of the wake to the range of the wake. For convenience, FIGS. 13(a) and 13(b) illustrate a state in which the wake W10 is separated into 8 parts along a path ST1 of the ship.

] Referring to FIG. 13(a), the control module 11 is configured to acquire longitude and latitude positions of the ship S 1 when necessary from the GPS installed in the ship S1. The control module 11 is configured to convert the present and past longitude/latitude positions into positions centered on the own ship in the azimuth angle θ, the depression angle ϕ, and the distance coordinates, and calculate the path ST1 of the own ship from the converted positions. Since ship S 1 moves on the water surface, the depression angle ϕ is set to zero in this conversion. Then, the control module 11 is configured to calculate ranges T0 to T7 of the wakes existing on the path ST1 based on echo signals acquired from reception beams near the surface layer in the present ping.

That is, the control module 11 is configured to scan the echo signals along the path ST1 in a direction away from the own ship S1. When position P21, which is a position whose echo intensity exceeds a threshold value, appears in this scanning process, the range of the wake W10 is calculated by the same process as in the above embodiment with reference to the position P21. Then, in the calculated range of the wake W10, the control module 11 is configured to determine position P22, which is the farthest position from the own ship in the scanning direction of the path ST1.

Thereafter, the control module 11 is configured to further scan the path ST1 from the position P22. Thus, when the position P21 where the echo intensity exceeds the threshold value appears again, the same process as described above is executed to calculate the range of the wake W10 and to determine the position P22. The control module 11 is configured to execute this process until no new position P21 appears. Thus, as illustrated in FIG. 13(a), a plurality of wake ranges T0 to T7 arranged along the path ST1 of the ship S1 are calculated. The control module 11 sets a temporary wake label to the calculated wake ranges.

Next, the control module 11 is configured to perform process for filling the gaps between the wake ranges T0 to T7 to which the temporary label is set. Specifically, the control module 11 is configured to calculate a range of the azimuth angle θ that includes the wake ranges T0 to T7 for which the temporary label is set, and performs a process of filling the gaps for each reception space RS 1 included in the range of the azimuth angle θ.

FIG. 13(b) illustrates a cross section of the wake ranges T1 to T7 in the reception space RS1 illustrated in FIG. 13(a). Since the reception space RS1 does not fall within the wake range T0, FIG. 13(b) does not include a cross section of the wake range T0.

Among the reception beams RB1 that scan the reception space RS 1 in the depression angle direction, the control module 11 is configured to refer to echo signals of the plurality of reception beams RB1 that crosses the wake ranges T1 to T7. The control module 11 is further configured to search the echo signals of each reception beam RB1 in a direction away from the ship S 1, and calculate a start position P31 and an end position P32 of the echo signals in the wake ranges T1 to T7 with the temporary label.

Then, within the plurality of wake ranges arranged in the direction of the reception beams RB1, the control module 11 is configured to set a wake label to each echo position between the end position P32 of an arbitrary wake range Tn and the start position P31 of a wake range Tn+1 appearing next in the direction away from the ship S1 with respect to the wake range Tn, i.e. to each echo position within wake gaps. The control module 11 is configured to perform this process for all reception beams RB 1 crossing the wake ranges T1 to T7.

Thus, the wake label is set to all echo positions in the gaps between the wake ranges T1 to T7 included in reception space RS 1. The control module 11 is configured to then re-label the temporary label set in the wake ranges T1 to T7 into the wake label. As a result, the wake ranges T1 to T7 and the range of the gaps are labeled with the wake label, and the whole range is set to the range of the wake.

Further, the range of the wake set for one reception space RS 1 is integrated for all reception spaces RS 1 included in the range of azimuth θ including the wake ranges T0 to T7 to set the whole range of the wake. The control module 11 is configured to acquire this whole range of the wake as the range of the wake in the present ping.

According to the configuration of the third modification, even if the user does not select the wake W10, the control module 11 is configured to automatically calculate the range of the wake. For example, in response to the user selecting the fish school F10, the control module 11 may automatically calculate the range of the wake with the above process. Thus, since the user does not have to select the wake, the operability of the sonar 10 can be enhanced.

In the third modification, as in the second modification, the gap between wakes can be eliminated. Therefore, by the process of FIG. 9(b), the search ranges of the echoes of the fish school and the wake can be set more accurately, and the range of the fish school can be calculated accurately.

In addition, the position of the wake (the range of the wake) excluded from the search range of the fish school echoes is calculated from past positions of the ship S 1. That is, the path ST1 of the ship S1 is calculated from the past positions of the ship S1, and the range of the wake is calculated by the processes of FIGS. 13(a) and 13(b) based on the calculated path ST1. Thus, the range of the wake can be accurately calculated.

### < Fourth Modification >

In the process of FIG. 9(b), the range of the wake in the previous ping is used, but the range of the wake may also be predicted in the present ping, and the predicted range of the wake may be used in the process of FIG. 9(b). For example, as for the prediction of the fish school position, the control module 11 may calculate a displacement vector of the wake from past calculation results of the range of the wake, and predict the range of the wake in the present ping based on the displacement vector.

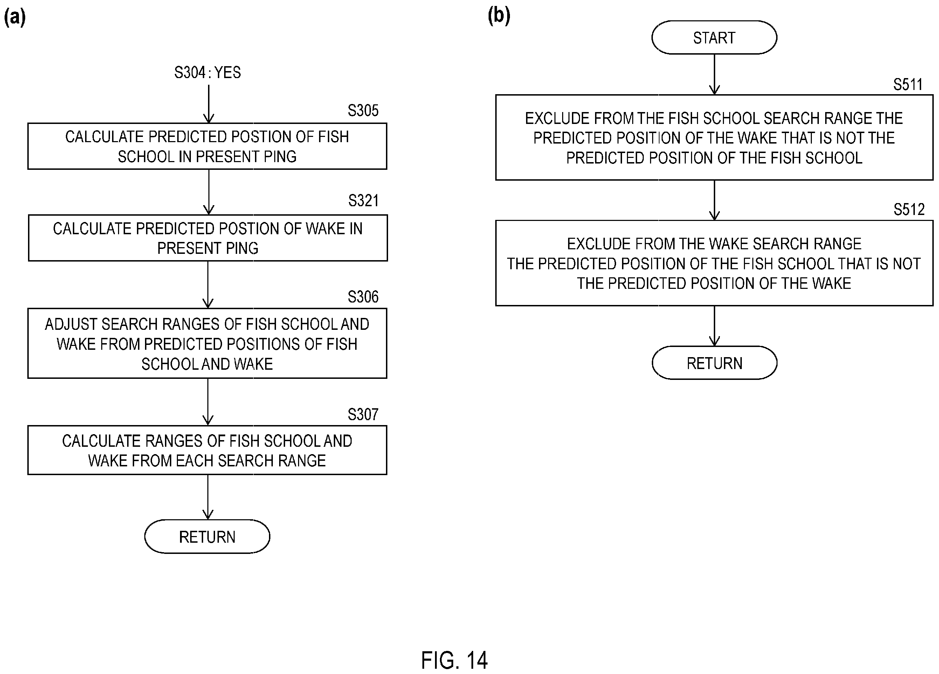

In this case, the process of FIG. 8 is modified as illustrated in FIG. 14(a), and the process of FIG. 9(b) is modified as illustrated in FIG. 14(b). For the sake of convenience, FIG. 14(a) only illustrates the part of the process of FIG. 8 in the case where step S304 becomes YES, and the steps S301 to S304 and S308 of FIG. 8 are omitted.

Referring to FIG. 14(a), the control module 11 is configured to calculate, at step S305, the predicted position of the fish school, and then, at step S321, convert the position of the wake calculated in the previous ping into coordinates centered on the position of the ship in the present ping to calculate the predicted position of the wake in the present ping. That is, the control module 11 is configured to convert the position of the wake calculated in the previous ping into the longitude/latitude coordinate system in the previous ping and save it. The control module 11 is configured to convert that position of the wake into an azimuth angle θ, a depression angle ϕ, and a distance centered on the position of the ship in the present ping to calculate the predicted position of the wake in the present ping.

Then, the control module 11 is configured to adjust, at step S306, the search ranges of the echoes of the fish school and the wake from the predicted positions of the fish school and the wake, and to calculate, at step S307, the ranges of the fish school and the wake from the adjusted search ranges.

Referring to FIG. 14(b), in the process of step S306 in FIG. 14(a), at step S511, the control module 11 excludes from the search range of the fish school the predicted position of the wake that is not also the predicted position of the fish school. That is, the control module 11 does not include a predicted position of the wake in the search range of the fish school echoes if that predicted position of the wake is not a predicted position of the fish school, and includes a predicted position of the wake in the search range of the fish school echoes if that predicted position of the wake is a predicted position of the fish school.

Also, at step S512, the predicted position of the fish school that is not also the predicted position of the wake is excluded from the search range of the wake. That is, the control module 11 is configured to not include a predicted position of the fish school in the search range of the wake echoes if that predicted position of the fish school is not a predicted position of the wake. On the other hand, the control module 11 is configured to include a predicted position of the fish school in the search range of the wake echoes if that predicted position of the fish school is a predicted position of the wake.

### < Other Modifications >

In the above embodiments, the wake has been used as the second underwater target different from the fish school, but the second underwater target may be a target other than the wake. For example, the second underwater target may be a shipwreck or a reef. In this case, the user may select on the echo image the shipwreck or the reef as the second underwater target. The range of the shipwreck, the reef, etc., can also be calculated by searching echo connections based on the selected position, as in the above embodiments.

] Although FIG. 4 illustrates an example in which there is one fish school F10 and one wake W10, a plurality of fish schools F10 may be selectable, and a plurality of second underwater targets may be selectable.

At step S304 of FIG. 8, the increase in the size of the fish school is compared with the threshold, but the value to be compared with the threshold may be another value as long as it can be determined that the size of the fish school has rapidly increased in the present ping. For example, a growth rate of the size of the fish school may be compared to a threshold. In this case, at step S303 of FIG. 8, the growth rate of the size of the fish school at the present ping is calculated relative to the size of the fish school at the previous ping. Also, the size of the fish school at a ping earlier than the previous ping may be used for calculating the increase in the size of the fish school or the growth rate of the size of the fish school. For example, if for some reason the fish school could not be detected in the previous ping, the increase in the size of the fish school or the growth rate of the size of the fish school may be calculated by comparing the size of the fish school calculated in the present ping with the size of the fish school calculated in a ping earlier than the previous ping.

Also, in the above embodiments, various functions, such as the target detection module 11a, are shown as the functions of the control module 11 provided by the program stored in the storage module 12, but these functions may not necessarily be realized as the functions provided by the program stored in the storage module 12. For example, one or more of these functions may comprise an FPGA (field-programmable gate array) or hardware integrated with a logic circuit.

Further, in the above embodiments, in the reception space RS1, the extent of the angle in the depression angle ϕ direction is 90 degrees, but the present disclosure is not limited to this. For example, in the reception space RS1, the extent of the angle in the depression angle ϕ direction may be made smaller than 90 degrees. For example, a two-dimensional sonar using an umbrella-shaped transmission beam may be used. Further, it is not necessary for the sonar to be a 360 degree sonar for detecting a target over the entire circumference in the azimuth angle θ direction, and for example, the sonar may be a half-circumference type sonar.

## Claims

1. A SONAR device (10), comprising:
an echo signal acquisition module (15a) configured to acquire echo signals from a ping, from a plurality of reception spaces (RS 1) adjacent to each other, the echo signals being of a target comprising a fish school; and
a target detection module (11a) configured to calculate a range of the fish school by searching, in a search range associated with the fish school, echo connections in the echo signals of the fish school in the plurality of adjacent reception spaces (RS 1), wherein searching comprises determining whether or not a strong echo area exists in an adjacent reception space (RS 1) having an echo position with a same depth and a same distance as at least one echo position included in this strong echo area in a reference reception space (RS 1); wherein the search range associated with the fish school is adjustable; and
a target position prediction module (11b) configured to calculate a predicted position of the fish school based on the echo signals of the fish school acquired from at least two previous pings, by calculating a displacement vector (MV10) of the fish school based on a range of the fish school calculated at least for two previous pings, wherein the predicted position comprises a predicted range, which is obtained by moving the range of the fish school calculated in a previous ping, in accordance with the displacement vector;
wherein the target detection module (11a) is configured to adjust the search range of the fish school based on the predicted position of the fish school;
wherein:
the echo signal acquisition module (15a) is configured to acquire from the ping echo signals of a second underwater target different from the fish school;
the target detection module (11a) is further configured to adjust the search range of the fish school based on a position of the second underwater target;
and
the target detection module (11a) is further configured to not include in the search range of the fish school, a position of the second underwater target, when the position of the second underwater target is different from a predicted position of the fish school.

2. The SONAR device (10) of claim 1, wherein
the target position prediction module (11b) is further configured to calculate the predicted position of the fish school based on a displacement of a ship, on which the SONAR device (10) is to be installed, from a previous ping, to a present ping.

3. The SONAR device (10) of claim 1 or claim 2, wherein
the target detection module (11a) is further configured to include in the search range of the fish school a position of the second underwater target, when the position of the second underwater target is a predicted position of the fish school.

4. The SONAR device (10) of any of the previous claim, wherein
the second underwater target is a wake of a ship on which the SONAR device (10) is to be installed.

5. The SONAR device (10) of claim 4, wherein
the position of the wake of the ship is calculated from the echo signals of the wake of the ship.

6. The SONAR device (10) of claim 5, wherein
the position of the wake of the ship is calculated from past positions of the ship.

7. The SONAR device (10) of any of the previous claims, further comprising:
a target size calculation module (11c) configured to:
calculate a current size of the fish school based on the echo signals of the fish school acquired from the ping, and
calculate an increase in size of the fish school by comparing the current size of the fish school with a past size of the fish school calculated in a past ping, wherein
the target detection module (11a) is further configured to adjust the search range of the fish school when the increase in the size of the fish school is more than a given threshold.

8. The SONAR device (10) of any of the previous claims, further comprising:
a target position calculation module (11e) configured to:
calculate a current position of the fish school based on the echo signals of the fish school acquired from the ping, and
calculate a displacement of the fish school by comparing the current position of the fish school with a past position of the fish school calculated in a past ping, wherein
the target detection module (11a) is further configured to adjust the search range of the fish school when the displacement is more than a given threshold.

9. The SONAR device (10) of any of the previous claims, further comprising:
an image generation module (11d) configured to generate an image that displays the echo signals acquired from the ping and the calculated range of the fish school.

10. A target detection method, comprising:
acquiring echo signals from a ping, from a plurality of reception spaces (RS 1) adjacent to each other, the echo signals being of a target comprising a fish school; and
calculating a range of the fish school by searching, in a search range associated with the fish school, echo connections in the echo signals of the fish school in the plurality of adjacent reception spaces (RS 1), wherein searching comprises determining whether or not a strong echo area exists in an adjacent reception space (RS 1) having an echo position with a same depth and a same distance as at least one echo position included in this strong echo area in a reference reception space (RS 1);
wherein the search range associated with the fish school is adjustable;
calculating a predicted position of the fish school based on the echo signals of the fish school acquired from at least two previous pings, by calculating a displacement vector (MV10) of the fish school based on a range of the fish school calculated at least for two previous pings, wherein the predicted position comprises a predicted range, which is obtained by moving the range of the fish school calculated in a previous ping, in accordance with the displacement vector;
adjusting the search range of the fish school based on the predicted position of the fish school;
acquiring, from the ping, echo signals of a second underwater target different from the fish school;
adjusting the search range of the fish school based on a position of the second underwater target; and
not including in the search range of the fish school, a position of the second underwater target, when the position of the second underwater target is different from a predicted position of the fish school.

11. A non-transitory computer-readable medium having stored thereon computer-executable instructions which, when executed by a computer, cause the computer to:
acquire echo signals from a ping, from a plurality of reception spaces (RS1) adjacent to each other, the echo signals being of a target comprising a fish school;
calculate a range of the fish school by searching, in a search range associated with the fish school, echo connections in the echo signals of the fish school in the plurality of adjacent reception spaces (RS1); wherein searching comprises determining whether or not a strong echo area exists in an adjacent reception space (RS1) having an echo position with a same depth and a same distance as at least one echo position included in this strong echo area in a reference reception space (RS1);
wherein the search range associated with the fish school is adjustable;
calculate a predicted position of the fish school based on the echo signals of the fish school acquired from at least two previous pings, by calculating a displacement vector (MV10) of the fish school based on a range of the fish school calculated at least for two previous pings, wherein the predicted position comprises a predicted range, which is obtained by moving the range of the fish school calculated in a previous ping, in accordance with the displacement vector;
adjust the search range of the fish school based on the predicted position of the fish school;
acquire, from the ping, echo signals of a second underwater target different from the fish school;
adjust the search range of the fish school based on a position of the second underwater target; and
not include in the search range of the fish school, a position of the second underwater target, when the position of the second underwater target is different from a predicted position of the fish school.

## Patentansprüche

1. SONAR-Gerät (10), das Folgendes umfasst:
ein Echosignalerfassungsmodul (15a), konfiguriert zum Erfassen von Echosignalen aus einem Ping von mehreren nebeneinander liegenden Empfangsräumen (RS1), wobei die Echosignale von einem einen Fischschwarm umfassenden Ziel stammen; und
ein Zielerkennungsmodul (11a), konfiguriert zum Berechnen einer Entfernung des Fischschwarms durch Suchen, in einem mit dem Fischschwarm assoziierten Suchbereich, von Echo-Verbindungen in den Echosignalen des Fischschwarms in den mehreren nebeneinander liegenden Empfangsräumen (RS1), wobei das Suchen das Feststellen beinhaltet, ob ein Gebiet mit starkem Echo in einem benachbarten Empfangsraum (RS1) mit einer Echoposition mit einer selben Tiefe und einem selben Abstand wie mindestens eine in diesem Gebiet mit starkem Echo in einem Referenzempfangsraum (RS1) enthaltene Echoposition vorhanden ist oder nicht; wobei der mit dem Fischschwarm assoziierte Suchbereich justierbar ist; und
ein Zielpositionsvorhersagemodul (11b), konfiguriert zum Berechnen einer vorhergesagten Position des Fischschwarms auf der Basis der aus mindestens zwei vorherigen Pings erfassten Echosignale des Fischschwarms durch Berechnen eines Verlagerungsvektors (MV10) des Fischschwarms auf der Basis einer zumindest für zwei vorherige Pings berechneten Entfernung des Fischschwarms, wobei die vorhergesagte Position eine vorhergesagte Entfernung umfasst, die durch Verlagern der in einem vorherigen Ping berechneten Entfernung des Fischschwarms gemäß dem Verlagerungsvektor erhalten wird;
wobei das Zielerkennungsmodul (11a) zum Justieren des Suchbereichs des Fischschwarms auf der Basis der vorhergesagten Position des Fischschwarms konfiguriert ist;
wobei:
das Echosignalerfassungsmodul (15a) zum Erfassen, aus dem Ping, von Echosignlen eines sich von dem Fischschwarm unterscheidenden zweiten Unterwasserziels konfiguriert ist;
das Zielerkennungsmodul (11a) ferner zum Justieren des Suchbereichs des Fischschwarms auf der Basis einer Position des zweiten Unterwasserziels konfiguriert ist;
und
das Zielerkennungsmodul (11a) ferner so konfiguriert ist, dass es eine Position des zweiten Unterwasserziels nicht in den Suchbereich des Fischschwarms einbezieht, wenn sich die Position des zweiten Unterwasserziels von einer vorhergesagten Position des Fischschwarms unterscheidet.

2. SONAR-Gerät (10) nach Anspruch 1, wobei
das Zielpositionsvorhersagemodul (11b) ferner zum Berechnen der vorhergesagten Position des Fischschwarms auf der Basis einer Verlagerung eines Schiffs, auf dem das SONAR-Gerät (10) installiert werden soll, von einem vorherigen Ping zu einem aktuellen Ping konfiguriert ist.

3. SONAR-Gerät (10) nach Anspruch 1 oder 2, wobei
das Zielerkennungsmodul (11a) ferner so konfiguriert ist, dass es eine Position des zweiten Unterwasserziels in den Suchbereich des Fischschwarms einbezieht, wenn die Position des zweiten Unterwasserziels eine vorhergesagte Position des Fischschwarms ist.

4. SONAR-Gerät (10) nach einem der vorherigen Ansprüche, wobei
das zweite Unterwasserziel ein Kielwasser eines Schiffs ist, auf dem das SONAR-Gerät (10) installiert werden soll.

5. SONAR-Gerät (10) nach Anspruch 4, wobei
die Position des Kielwassers des Schiffs aus den Echosignalen des Kielwassers des Schiffs berechnet wird.

6. SONAR-Gerät (10) nach Anspruch 5, wobei
die Position des Kielwassers des Schiffs aus vorherigen Positionen des Schiffs berechnet wird.

7. SONAR-Gerät (10) nach einem der vorherigen Ansprüche, das ferner Folgendes umfasst:
ein Zielgrößenberechnungsmodul (11c), konfiguriert zum:
Berechnen einer aktuellen Größe des Fischschwarms auf der Basis der aus dem Ping erfassten Echosignale des Fischschwarms, und
Berechnen einer Zunahme der Größe des Fischschwarms durch Vergleichen der aktuellen Größe des Fischschwarms mit einer in einem vorherigen Ping berechneten vorherigen Größe des Fischschwarms, wobei
das Zielerkennungsmodul (11a) ferner zum Justieren des Suchbereichs des Fischschwarms konfiguriert ist, wenn die Zunahme der Größe des Fischschwarms größer als ein gegebener Schwellenwert ist.

8. SONAR-Gerät (10) nach einem der vorherigen Ansprüche, das ferner Folgendes umfasst:
ein Zielpositionsberechnungsmodul (11e), konfiguriert zum:
Berechnen einer aktuellen Position des Fischschwarms auf der Basis der aus dem Ping erfassten Echosignale des Fischschwarms, und
Berechnen einer Verlagerung des Fischschwarms durch Vergleichen der aktuellen Position des Fischschwarms mit einer in einem vorherigen Ping berechneten vorherigen Position des Fischschwarms, wobei
das Zielerkennungsmodul (11a) ferner zum Justieren des Suchbereichs des Fischschwarms konfiguriert ist, wenn die Verlagerung größer als ein gegebener Schwellenwert ist.

9. SONAR-Gerät (10) nach einem der vorherigen Ansprüche, das ferner Folgendes umfasst:
ein Bilderzeugungsmodul (11d), konfiguriert zum Erzeugen eines Bildes, das die aus dem Ping erfassten Echosignale und die berechnete Entfernung des Fischschwarms anzeigt.

10. Zielerkennungsverfahren, das Folgendes beinhaltet:
Erfassen von Echosignalen aus einem Ping von mehreren nebeneinander liegenden Empfangsräumen (RS1), wobei die Echosignale von einem einen Fischschwarm umfassenden Ziel stammen; und
Berechnen einer Entfernung des Fischschwarms durch Suchen, in einem mit dem Fischschwarm assoziierten Suchbereich, von Echoverbindungen in den Echosignalen des Fischschwarms in den mehreren nebeneinander liegenden Empfangsräumen (RS1), wobei das Suchen das Feststellen beinhaltet, ob ein Gebiet mit starkem Echo in einem benachbarten Empfangsraum (RS1) mit einer Echoposition mit einer selben Tiefe und einem selben Abstand wie mindestens eine in diesem Gebiet mit starkem Echo in einem Referenzempfangsraum (RS1) enthaltene Echoposition vorhanden ist oder nicht;
wobei der mit dem Fischschwarm assoziierte Suchbereich justierbar ist;
Berechnen einer vorhergesagten Position des Fischschwarms auf der Basis der aus mindestens zwei vorherigen Pings erfassten Echosignale des Fischschwarms durch Berechnen eines Verlagerungsvektors (MV10) des Fischschwarms auf der Basis einer mindestens für zwei vorherige Pings berechneten Entfernung des Fischschwarms, wobei die vorhergesagte Position eine vorhergesagte Entfernung umfasst, die durch Verlagern der in einem vorherigen Ping berechneten Entfernung des Fischschwarms gemäß dem Verlagerungsvektor erhalten wird;
Justieren des Suchbereichs des Fischschwarms auf der Basis der vorhergesagten Position des Fischschwarms;
Erfassen, aus dem Ping, von Echosignalen eines zweiten Unterwasserziels, das sich von dem Fischschwarm unterscheidet;
Justieren des Suchbereichs des Fischschwarms auf der Basis einer Position des zweiten Unterwasserziels; und
Nichteinbeziehen einer Position des zweiten Unterwasserziels in den Suchbereich des Fischschwarms, wenn sich die Position des zweiten Unterwasserziels von einer vorhergesagten Position des Fischschwarms unterscheidet.

11. Nichtflüchtiges computerlesbares Medium, auf dem computerausführbare Befehle gespeichert sind, die bei Ausführung durch einen Computer den Computer veranlassen zum:
Erfassen von Echosignalen aus einem Ping von mehreren nebeneinander liegenden Empfangsräumen (RS1), wobei die Echosignale von einem einen Fischschwarm umfassenden Ziel stammen;
Berechnen einer Entfernung des Fischschwarms durch Suchen, in einem mit dem Fischschwarm assoziierten Suchbereich, von Echoverbindungen in den Echosignalen des Fischschwarms in den mehreren nebeneinander liegenden Empfangsräumen (RS1), wobei das Suchen das Feststellen beinhaltet, ob ein Gebiet mit starkem Echo in einem benachbarten Empfangsraum (RS1) mit einer Echoposition mit einer selben Tiefe und einem selben Abstand wie mindestens eine in diesem Gebiet mit starkem Echo in einem Referenzempfangsraum (RS1) enthaltene Echoposition vorhanden ist oder nicht;
wobei der mit dem Fischschwarm assoziierte Suchbereich justierbar ist;
Berechnen einer vorhergesagten Position des Fischschwarms auf der Basis der aus mindestens zwei vorherigen Pings erfassten Echosignale des Fischschwarms durch Berechnen eines Verlagerungsvektors (MV10) des Fischschwarms auf der Basis einer mindestens für zwei vorherige Pings berechneten Entfernung des Fischschwarms, wobei die vorhergesagte Position eine vorhergesagte Entfernung umfasst, die durch Verlagern der in einem vorherigen Ping berechneten Entfernung des Fischschwarms gemäß dem Verlagerungsvektor erhalten wird;
Justieren des Suchbereichs des Fischschwarms auf der Basis der vorhergesagten Position des Fischschwarms;
Erfassen, aus dem Ping, von Echosignalen eines zweiten Unterwasserziels, das sich von dem Fischschwarm unterscheidet;
Justieren des Suchbereichs des Fischschwarms auf der Basis einer Position des zweiten Unterwasserziels; und
Nichteinbeziehen einer Position des zweiten Unterwasserziels in den Suchbereich des Fischschwarms, wenn sich die Position des zweiten Unterwasserziels von einer vorhergesagten Position des Fischschwarms unterscheidet.

## Revendications

1. Dispositif SONAR (10), comprenant :
un module d'acquisition de signaux d'écho (15a) configuré pour acquérir des signaux d'écho à partir d'un ping, en provenance d'une pluralité d'espaces de réception (RS1) adjacents les uns aux autres, les signaux d'écho étant d'une cible comprenant un banc de poissons ; et
un module de détection de cible (11a) configuré pour calculer une portée du banc de poissons en recherchant, dans une portée de recherche associée au banc de poissons, des connexions d'écho dans les signaux d'écho du banc de poissons dans la pluralité d'espaces de réception (RS1) adjacents, la recherche comprenant le fait de déterminer s'il existe ou non une zone de forts échos dans un espace de réception (RS1) adjacent ayant une position d'écho avec une même profondeur et une même distance qu'au moins une position d'écho comprise dans cette zone de forts échos dans un espace de réception (RS1) de référence ; la portée de recherche associée au banc de poissons étant réglable ; et
un module de prédiction de position de cible (11b) configuré pour calculer une position prédite du banc de poissons sur la base des signaux d'écho du banc de poissons acquis à partir d'au moins deux pings précédents, en calculant un vecteur de déplacement (MV10) du banc de poissons sur la base d'une portée du banc de poissons calculée au moins pour deux pings précédents, la position prédite comprenant une portée prédite, qui est obtenue en déplaçant la portée du banc de poissons calculée lors d'un ping précédent, selon le vecteur de déplacement ;
le module de détection de cible (11a) étant configuré pour régler la portée de recherche du banc de poissons sur la base de la position prédite du banc de poissons ;
où :
le module d'acquisition de signaux d'écho (15a) est configuré pour acquérir, à partir du ping, des signaux d'écho d'une seconde cible sous-marine différente du banc de poissons ;
le module de détection de cible (11a) est en outre configuré pour régler la portée de recherche du banc de poissons sur la base d'une position de la seconde cible sous-marine ; et
le module de détection de cible (11a) est en outre configuré pour ne pas inclure dans la portée de recherche du banc de poissons une position de la seconde cible sous-marine, lorsque la position de la seconde cible sous-marine est différente d'une position prédite du banc de poissons.

2. Dispositif SONAR (10) selon la revendication 1, dans lequel :
le module de prédiction de position de cible (11b) est en outre configuré pour calculer la position prédite du banc de poissons sur la base d'un déplacement d'un navire, sur lequel le dispositif SONAR (10) doit être installé, depuis un ping précédent jusqu'à un ping actuel.

3. Dispositif SONAR (10) selon la revendication 1 ou 2, dans lequel :
le module de détection de cible (11a) est en outre configuré pour inclure dans la portée de recherche du banc de poissons une position de la seconde cible sous-marine, lorsque la position de la seconde cible sous-marine est une position prédite du banc de poissons.

4. Dispositif SONAR (10) selon l'une quelconque des revendications précédentes, dans lequel :
la seconde cible sous-marine est un sillage d'un navire sur lequel le dispositif SONAR (10) doit être installé.

5. Dispositif SONAR (10) selon la revendication 4, dans lequel :
la position du sillage du navire est calculée à partir des signaux d'écho du sillage du navire.

6. Dispositif SONAR (10) selon la revendication 5, dans lequel :
la position du sillage du navire est calculée à partir de positions antérieures du navire.

7. Dispositif SONAR (10) selon l'une quelconque des revendications précédentes, comprenant en outre :
un module de calcul de taille de cible (11c) configuré pour :
calculer une taille actuelle du banc de poissons sur la base des signaux d'écho du banc de poissons, acquis à partir du ping, et
calculer une augmentation de la taille du banc de poissons en comparant la taille actuelle du banc de poissons à une taille antérieure du banc de poissons calculée lors d'un ping antérieur,
le module de détection de cible (11a) étant en outre configuré pour régler la portée de recherche du banc de poissons lorsque l'augmentation de la taille du banc de poissons est supérieure à un seuil donné.

8. Dispositif SONAR (10) selon l'une quelconque des revendications précédentes, comprenant en outre :
un module de calcul de position de cible (11e) configuré pour :
calculer une position actuelle du banc de poissons sur la base des signaux d'écho du banc de poissons, acquis à partir du ping, et
calculer un déplacement du banc de poissons en comparant la position actuelle du banc de poissons à une position antérieure du banc de poissons calculée lors d'un ping antérieur,
le module de détection de cible (11a) étant est en outre configuré pour régler la portée de recherche du banc de poissons lorsque le déplacement est supérieur à un seuil donné.

9. Dispositif SONAR (10) selon l'une quelconque des revendications précédentes, comprenant en outre :
un module de génération d'image (11d) configuré pour générer une image qui affiche les signaux d'écho acquis à partir du ping et la portée calculée du banc de poissons.

10. Procédé de détection de cible, comprenant les étapes consistant à :
acquérir des signaux d'écho à partir d'un ping, en provenance d'une pluralité d'espaces de réception (RS1) adjacents les uns aux autres, les signaux d'écho étant d'une cible comprenant un banc de poissons ; et
calculer une portée du banc de poissons en recherchant, dans une portée de recherche associée au banc de poissons, des connexions d'écho dans les signaux d'écho du banc de poissons dans la pluralité d'espaces de réception (RS1) adjacents, la recherche comprenant l'étape consistant à déterminer s'il existe ou non une zone de forts échos dans un espace de réception (RS1) adjacent ayant une position d'écho avec une même profondeur et une même distance qu'au moins une position d'écho comprise dans cette zone de forts échos dans un espace de réception (RS1) de référence ;
la portée de recherche associée au banc de poissons étant réglable ;
calculer une position prédite du banc de poissons sur la base des signaux d'écho du banc de poissons acquis à partir d'au moins deux pings précédents, en calculant un vecteur de déplacement (MV10) du banc de poissons sur la base d'une portée du banc de poissons calculée au moins pour deux pings précédents, la position prédite comprenant une portée prédite, qui est obtenue en déplaçant la portée du banc de poissons calculée lors d'un ping précédent, selon le vecteur de déplacement ;
régler la portée de recherche du banc de poissons sur la base de la position prédite du banc de poissons ;
acquérir, à partir du ping, des signaux d'écho d'une seconde cible sous-marine différente du banc de poissons ;
régler la portée de recherche du banc de poissons sur la base d'une position de la seconde cible sous-marine ; et
ne pas inclure dans la portée de recherche du banc de poissons une position de la seconde cible sous-marine, lorsque la position de la seconde cible sous-marine est différente d'une position prédite du banc de poissons.

11. Support non transitoire lisible par ordinateur, sur lequel sont stockées des instructions exécutables par ordinateur qui, lorsqu'elles sont exécutées par un ordinateur, amènent l'ordinateur à :
acquérir des signaux d'écho à partir d'un ping, en provenance d'une pluralité d'espaces de réception (RS1) adjacents les uns aux autres, les signaux d'écho étant d'une cible comprenant un banc de poissons ;
calculer une portée du banc de poissons en recherchant, dans une portée de recherche associée au banc de poissons, des connexions d'écho dans les signaux d'écho du banc de poissons dans la pluralité d'espaces de réception (RS1) adjacents ; la recherche comprenant le fait de déterminer s'il existe ou non une zone de forts échos dans un espace de réception (RS1) adjacent ayant une position d'écho avec une même profondeur et une même distance qu'au moins une position d'écho comprise dans cette zone de forts échos dans un espace de réception (RS1) de référence ;
la portée de recherche associée au banc de poissons étant réglable ;
calculer une position prédite du banc de poissons sur la base des signaux d'écho du banc de poissons acquis à partir d'au moins deux pings précédents, en calculant un vecteur de déplacement (MV10) du banc de poissons sur la base d'une portée du banc de poissons calculée au moins pour deux pings précédents, la position prédite comprenant une portée prédite, qui est obtenue en déplaçant la portée du banc de poissons calculée lors d'un ping précédent, selon le vecteur de déplacement ;
régler la portée de recherche du banc de poissons sur la base de la position prédite du banc de poissons ;
acquérir, à partir du ping, des signaux d'écho d'une seconde cible sous-marine différente du banc de poissons ;
régler la portée de recherche du banc de poissons sur la base d'une position de la seconde cible sous-marine ; et
ne pas inclure dans la portée de recherche du banc de poissons une position de la seconde cible sous-marine, lorsque la position de la seconde cible sous-marine est différente d'une position prédite du banc de poissons.
